(19) Europäisches Patentamt
European Patent Office
Office européen des brevets

(11) **EP 4 586 483 A1**

(12) **EUROPÄISCHE PATENTANMELDUNG**

(43) Veröffentlichungstag:
**16.07.2025 Patentblatt 2025/29**

(21) Anmeldenummer: **24151415.7**

(22) Anmeldetag: **11.01.2024**

(51) Internationale Patentklassifikation (IPC):
***H02M 3/158*** *(2006.01)*

(52) Gemeinsame Patentklassifikation (CPC):
**H02M 3/1586; H02M 3/1582;** H02M 1/0009;
H02M 3/1588

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder:
- **Fraunhofer-Gesellschaft zur Förderung der angewandten Forschung e.V.
  80686 München (DE)**
- **Friedrich-Alexander-Universität Erlangen-Nürnberg
  91054 Erlangen (DE)**

(72) Erfinder:
- **ZHOU, Yan
  91052 Erlangen (DE)**
- **DREXLER, Kilian
  91058 Erlangen (DE)**

(74) Vertreter: **König, Andreas Rudolf et al
Schoppe, Zimmermann, Stöckeler
Zinkler, Schenk & Partner mbB
Patentanwälte
Radlkoferstraße 2
81373 München (DE)**

(54) **GLEICHSPANNUNGSWANDLER**

(57) Ein Gleichspannungswandler umfasst eine Wandlerschaltung umfassend einen schaltbaren ersten Schaltungspfad, der in einem ersten Zeitintervall leitend ist, und der zumindest ein erstes und ein zweites seriell verschaltetes schaltbares Element aufweist, und umfassend einen vermittels eines induktiven Elements mit dem ersten Schaltungspfad gekoppelten zweiten Schaltungspfad, der in einem zum ersten Zeitintervall disjunkten zweiten Zeitintervall leitend ist, wobei zwischen dem ersten Zeitintervall und dem zweiten Zeitintervall ein zeitlicher Abstand liegt. Eine Steuerungseinrichtung ist für ein Schalten des ersten Schaltungspfades eingerichtet. Ein schaltbarer Freilaufpfad ist parallel zu dem induktiven Element gekoppelt, wobei die Steuerungseinrichtung ausgebildet ist, um den schaltbaren Freilaufpfad in einem Freilaufintervall während dem zeitlichen Abstand zeitweise leitend zu schalten.

Fig. 1

**Beschreibung**

Die vorliegende Erfindung bezieht sich auf einen Gleichspannungswandler. Die vorliegende Erfindung bezieht sich insbesondere auf eine Halbleiterisolation für Gleichspannungswandler und in manchen Ausführungsformen auf eine Fehlerschutzmaßnahme für einen auf Halbleiterisolation basierten isolierenden DC/DC-Wandler.

Ein Bestreben gegenwärtiger Entwicklungen besteht darin, Gleichspannungswandler unter Verwendung von Transistoren zu implementieren. Im Stand der Technik sind Möglichkeiten mit Halbleiterisolation etwa in der Veröffentlichung "New Cascaded Converter Topologies for Tranformerless Galvanic Active Isolation" präsentiert, wobei derartige Topologien auf die Verwendung geringer Spannungen und kleiner Leistungen beschränkt sind.

Für eine zunehmende Betriebsspannung und einen höheren Leistungsbereich sind bekannte Topologien unzureichend. Einerseits ist ein im Stand der Technik gefordertes gleichzeitiges Ausschalten der Transistoren in einer realen technischen Implementierung schwierig zu gewährleisten. Vor dem Umschalten ist zudem der Spulenstrom schon aufgebaut. Dieser Spulenstrom kann die Schaltung beim Umschalten unerwünscht beeinflussen oder gar beschädigen. So kann beispielsweise ein in zwei DC-Netzen diagonal angelegtes Potential durch eine Diode und den verzögert ausschaltenden Transistor fehlerhaft verbunden werden, was eine schlagartige Potentialverschiebung in beiden DC-Systemen des Gleichspannungswandlers verursachen kann und einen hohen getakteten Störstrom erzeugen kann. Andererseits kann es dazu kommen, dass zwei DC-Systeme direkt mit dem jeweils anderen getakteten Transistor diagonal verbunden werden und die Isolation und die Potentialtrennung zerstört werden, wenn ein Transistor während des Betriebs wegen eines Defektes nicht mehr ausgeschaltet werden kann. Dieser Defekt ist bei einem aufgebauten Spulenstrom besonders kritisch.

Wünschenswert wären demnach Gleichspannungswandlertopologien, die mit hohen Spannungen und Leistungen arbeiten können und gleichzeitig dennoch einen niedrigen Störpegel während des Betriebs ermöglichen.

Eine Aufgabe der vorliegenden Erfindung besteht deshalb darin, einen Gleichspannungswandler bereitzustellen, der es erlaubt, mit hohen Spannungen und Leistungen zu arbeiten und gleichzeitig dennoch einen niedrigen Störpegel während des Betriebs gewährleisten, also ein geringes Maß an Störung in elektromagnetischen Bereich.

Diese Aufgabe wird durch den Gegenstand des unabhängigen Patentanspruchs gelöst.

Ein Kerngedanke der vorliegenden Erfindung besteht darin, erkannt zu haben, dass ein definierter und insbesondere schaltbarer Freilaufpfad parallel zu dem induktiven Element, der Spule, des Gleichspannungswandlers es ermöglicht, den Spulenstrom während des Schaltvorgangs in einem definierten Freilaufintervall in den Freilaufpfad und damit in einen von zwei Zwischenkreisen unabhängigen Kreis aufzunehmen und/oder abzubauen. Während dies ein problemloses Umschalten der schaltenden Elemente der Zwischenkreise ermöglicht, wird ferner eine Möglichkeit geschaffen, den Spulenstrom im Fehlerfall abzubauen, nämlich über den ohmschen Widerstand des Freilaufpfades, was neben hohen Leistungen und Spannungen gleichzeitig geringe Störpegel ermöglicht.

Gemäß einem Ausführungsbeispiel umfasst ein Gleichspannungswandler eine Wandlerschaltung mit einem schaltbaren ersten Schaltungspfad mit zumindest einem ersten und einem zweiten seriell verschalteten schaltbaren Element und mit einem vermittels eines induktiven Elements mit dem ersten Schaltungspfad gekoppelten zweiten Schaltungspfad. Der erste Schaltungspfad ist während eines ersten Zeitintervalls leitend und der zweite Schaltungspfad ist während eines disjunkten zweiten Zeitintervalls leitend, wobei zwischen dem Ende des ersten Zeitintervalls und dem Beginn des zweiten Zeitintervalls und/oder, insbesondere unter Beachtung der möglicherweise periodischen Ansteuerung der Elemente, zwischen dem Ende des zweiten Zeitintervalls und dem Beginn des ersten Zeitintervalls ein zeitlicher Abstand liegt. Der Gleichspannungswandler umfasst eine Steuerungseinrichtung, die für ein Schalten des ersten und in manchen abhängigen Ausgestaltungen zusätzlich des zweiten Schaltungspfades eingerichtet ist. Ferner ist ein schaltbarer Freilaufpfad vorgesehen, der parallel zu dem induktiven Element gekoppelt ist, wobei die Steuerungseinrichtung ausgebildet ist, um den schaltbaren Freilaufpfad während der Zeitdauer des zeitlichen Abstandes zwischen dem ersten Zeitintervall und dem zweiten Zeitintervall zeitweise während einem Freilaufintervall leitend zu schalten. Dies ermöglicht den lokalen Freilauf und/oder den Abbau des Spulenstroms in dem Freilaufintervall.

Gemäß einem Ausführungsbeispiel umfasst der zweite Schaltungspfad zumindest ein drittes und möglicherweise auch ein seriell hierzu verschaltetes viertes schaltbares Element, etwa ähnlich oder symmetrisch zum ersten Schaltungspfad. Die Steuerungseinrichtung kann ausgebildet sein, um das dritte und/oder vierte schaltbare Element zu schalten. Alternative Ausgestaltungen sehen vor, anstelle des dritten bzw. vierten schaltbaren Elements eine passiv vermittels des fließenden Stroms oder des anliegenden Potentials schaltende Diode einzusetzen.

Gemäß einem Ausführungsbeispiel ist der Freilaufpfad in einem leitenden Zustand bidirektional leitend und/oder in einem nichtleitenden Zustand bidirektional sperrend. Dies ist von besonderem Vorteil bei der Verwendung von Halbleiterschaltern in dem Freilaufpfad, die sich entlang unterschiedlicher Stromflussrichtungen unterschiedlich verhalten können.

Gemäß einem Ausführungsbeispiel weist der Freilaufpfad zumindest ein Schaltelement auf, das in dem leitenden Zustand bidirektional leitend ist und in dem nichtleitenden Zustand bidirektional nichtleitend ist, wie es beispielsweise mit mechanischen Schaltern erreicht werden kann. Alternativ oder zusätzlich kann der Freilaufpfad ein erstes Schaltelement aufweisen, das in dem nichtleitenden Zustand unidirektional entlang einer ersten Richtung des Freilaufpfades sperrend ist. Der Freilaufpfad umfasst ein zweites Schaltelement, das in dem nichtleitenden Zustand unidirektional entlang einer entgegengesetzten zweiten Richtung des Freilaufpfades sperrend ist. Das erste Schaltelement und das zweite Schaltelement sind so verschaltet, dass in dem nichtleitenden Zustand der Freilaufpfad in der ersten Richtung und/oder der zweiten Richtung sperrend ist. Hierdurch können sich die beiden schaltenden Elemente, etwa Halbleiterschalter, gegenseitig ergänzen.

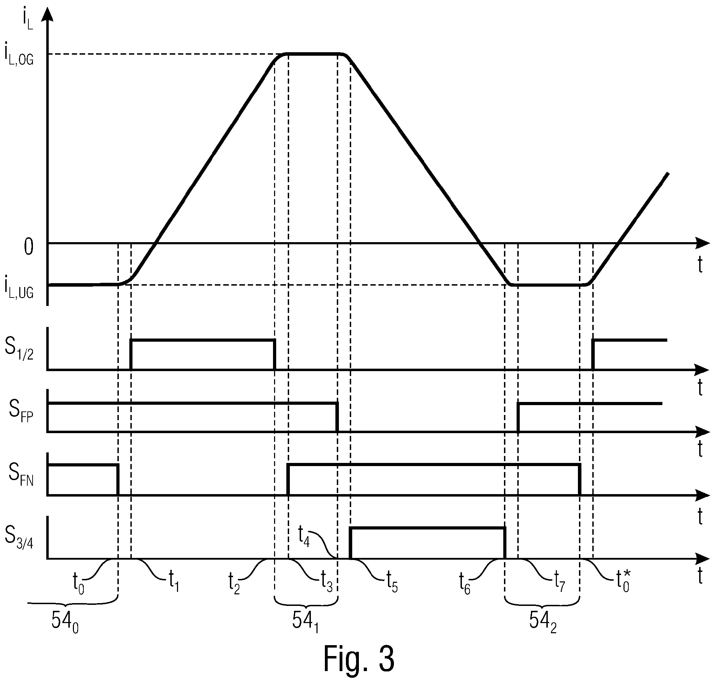

Einem hierauf gerichteten Ausführungsbeispiel folgend umfasst der Freilaufpfad einen ersten Halbleiterschalter und einen zweiten Halbleiterschalter, die antiseriell zueinander gekoppelt sind, etwa miteinander benachbarten Drain-Anschlüssen oder Kollektor-Anschlüssen. Dies ermöglicht die Überwindung der unterschiedlichen Verhalten der Halbleiterschalter entlang unterschiedlicher Stromflussrichtungen bei gleichzeitigem Ausnutzen der Vorteile von Halbleiterelementen, etwa schnelle Schaltfrequenzen, geringe Baugröße und gute Steuerbarkeit. Es ist bei einer derartigen Konfiguration ebenfalls möglich, den Freilaufpfad durch die Ansteuerung der Halbleiterschalter zwischen dem bidirektional nichtleitenden Zustand, dem bidirektional leitenden Zustand sowie einem unidirektional für eine bestimmte erste bzw. zweite Stromrichtung leitenden Zustand äquivalent wie eine Diode mit einstellbarer Sperrrichtung zu konfigurieren. Die unidirektionalen Zustände können bspw. für eine Vorbereitung für die Stromkommutierung von dem ersten und zweiten Schaltungspfad in den Freilaufpfad verwendet werden. Unter Verweis auf Fig. 3, Fig. 4, Fig. 5 und Fig. 6b kann möglicherweise ein Transistor des Freilaufpfads vor dem Anfang eines Freilaufintervalls als Zeitintervall 54 in einen unidirektionalen Zustand konfiguriert oder gesteuert werden, wie es ausführlich im Zusammenhang mit der Fig. 3 beschrieben ist.

Gemäß einem Ausführungsbeispiel ist die Steuerungseinrichtung ausgebildet, um das Freilaufintervall in Zeiten zu schalten, in denen die schaltbaren Elemente des ersten Schaltungspfades in einen sperrenden Zustand schaltet und der zweite Schaltungspfad sperrend ist. Durch den Freilaufpfad kann der Spulenstrom unter zumindest weitestgehender Vermeidung von Störströmen abfließen.

Gemäß einem Ausführungsbeispiel ist die Steuerungseinrichtung ausgebildet, um eine Zeitdauer des Freilaufintervalls gegenüber einem vorangehenden Freilaufintervall zu verlängern, um eine Schaltfrequenz der ersten und zweiten Schaltungspfade über mehrere Schaltzyklen hinweg zu reduzieren und/oder um die Zeitdauer des Freilaufintervalls gegenüber dem vorangehenden Freilaufintervall zu verkürzen, um die Schaltfrequenz der ersten und zweiten Schaltungspfade zu erhöhen. Es wird damit ermöglicht, eine vom Betriebspunkt unabhängige Schaltfrequenz einzustellen und somit unterschiedliche Betriebszustände zu ermöglichen.

Gemäß einem Ausführungsbeispiel umfasst der Gleichspannungswandler eine Detektionseinrichtung, die mit dem ersten Schaltungspfad und dem zweiten Schaltungspfad gekoppelt ist, und ausgebildet ist, um eine Potentialänderung zwischen dem ersten Schaltungspfad und dem zweiten Schaltungspfad zu erfassen. Die Steuerungseinrichtung ist ausgebildet, um basierend auf der Potentialänderung das Schalten des ersten Schaltungspfades und möglicherweise das Schalten von schaltbaren Elementen in dem zweiten Schaltungspfad zumindest teilweise zu beenden. Dies ermöglicht die Verhinderung von Beschädigungen aufgrund des Weiterbetriebs mit defekten Elementen.

Gemäß einem Ausführungsbeispiel umfasst der zweite Schaltungspfad zumindest ein drittes und optional auch ein viertes schaltbares Element. Die Steuerungseinrichtung ist ausgebildet, um basierend auf der Potentialänderung das Schalten des zweiten Schaltungspfades zumindest teilweise ebenfalls zu beenden.

Gemäß einem Ausführungsbeispiel umfasst die Detektionseinrichtung ein RC-Glied mit einem Widerstandselement und einem kapazitiven Element und ist ausgebildet, um einen Spannungsabfall über dem Widerstandselement und/oder dem kapazitiven Element zu erfassen, um die Potentialänderung zu erfassen. Dies ermöglicht eine besonders einfache und fehlerunanfällige Erkennung des Potentialunterschiedes, der auf einen Verlust der Isolationsfähigkeit zumindest eines der Schaltungspfade hinweisen kann.

Gemäß einem Ausführungsbeispiel ist die Steuerungseinrichtung ausgebildet, um bei einer erkannten Potentialänderung den schaltbaren Freilaufpfad leitend zu schalten. Dies ermöglicht die Vermeidung weiterer potenziell schädlicher Störströme.

Gemäß einem Ausführungsbeispiel ist die Steuerungseinrichtung ausgebildet, um bei einer erkannten Potentialänderung den ersten Schaltungspfad und/oder den zweiten Schaltungspfad sperrend zu schalten. Anders ausgedrückt, bei einer erkannten fehlerhaften Potentialänderung werden die Schaltelemente ausgeschaltet bzw. sperrend geschaltet. Auch hierdurch können möglicherweise Schädigungen verursachende Ströme vermieden werden oder zumindest reduziert werden.

Gemäß einem Ausführungsbeispiel ist die Steuerungseinrichtung ausgebildet, um den Gleichspannungswandler in zumindest einem aus einem kontinuierlichen Betrieb, einem diskontinuierlichen Betrieb, einem trapezförmigen Betrieb mit vorzeichenwechselndem Spulenstrom und einem Grenzbetrieb zu steuern. Dies ermöglicht eine vielseitige Anwendbarkeit des Gleichspannungswandlers.

Gemäß einem Ausführungsbeispiel umfasst der Gleichspannungswandler eine Mehrzahl von Wandlerschaltungen und eine korrespondierende Mehrzahl von Detektionseinrichtungen, die jeweils mit einer der Mehrzahl von Wandlerschaltungen zum Überwachen derselben gekoppelt sind. Dies ermöglicht eine wandlerschaltungsindividuelle Überwachung, während die Kopplung mit mehreren der Wandlerschaltungen eine geringe Anzahl von Detektionseinrichtungen ermöglicht. Beide Ausführungen sind problemlos miteinander kombinierbar, indem einige der Mehrzahl von in den Gleichspannungswandler verbauten Wandlerschaltungen kombinatorisch durch eine Detektionseinrichtung überwacht werden und andere Wandlerschaltungen individuell oder in einer zweiten Gruppe überwacht werden.

Gemäß einem Ausführungsbeispiel wird ein Gleichspannungswandler bereitgestellt, bei dem ein Auftreten der Potentialänderung als Reaktion auf ein Ansteuern eines angesteuerten schaltbaren Elementes in dem ersten Schaltungspfad eines schaltbaren Elementes eines zweiten Schaltungspfades in dem zweiten Schaltungspfad oder eines schaltbaren Elementes in dem Freilaufpfad eindeutig ein anderes Element der Wandlerschaltung als defektes Element anzeigt.

Gemäß einem Ausführungsbeispiel umfasst der Gleichspannungswandler eine Mehrzahl von parallel geschalteten Wandlerschaltungen. Die Steuerungseinrichtung ist ausgebildet, um die Mehrzahl von Wandlerschaltungen zeitversetzt zueinander zu steuern, so dass zu jedem Zeitpunkt ein Pfad höchstens einer Wandlerschaltung geschaltet wird. Die Detektionseinrichtung ist mit der Mehrzahl von Wandlerschaltungen gekoppelt, um eine Potentialänderung jeder der Wandlerschaltungen eindeutig festzustellen.

Weitere Ausführungsformen sind in den abhängigen Patentansprüchen definiert.

Bevorzugte Ausführungsformen der vorliegenden Erfindung werden nachfolgend Bezug nehmend auf die beiliegenden Zeichnungen erläutert. Es zeigen:

Fig. 1 ein schematisches Blockschaltbild eines Gleichspannungswandlers gemäß einem Ausführungsbeispiel;

Fig. 2 ein schematisches Blockschaltbild eines Gleichspannungswandlers gemäß einem Ausführungsbeispiel bei dem Schaltelemente eines Freilaufpfades antiseriell verschaltet sind;

Fig. 3 ein beispielhaftes Zeitdiagramm auf einer übereinstimmenden Zeitachse für eine Ansteuerung der von schaltenden Elementen des Gleichspannungswandlers aus Fig. 2 in einem TraCM Betriebsmodus gemäß einem Ausführungsbeispiel;

Fig. 4 ein beispielhaftes Zeitdiagramm von Ansteuersignalen der Schalter sowie der Schalter des Freilaufpfades aus Fig. 2 bei einem kontinuierlichen Strombetrieb, CCM, und einem diskontinuierlichen Strombetrieb, DCM, gemäß einem Ausführungsbeispiel;

Fig. 5 eine schematische beispielhafte Darstellung der Ansteuersignale der Schaltelemente sowie der Schaltelemente des Freilaufpfades zusammen mit einem beispielhaften schematischen Verlauf des Spulenstroms $i_L$ für einen negativen Spulenstrom gemäß einem Ausführungsbeispiel;

Fig. 6a ein schematisches Blockschaltbild eines Gleichspannungswandlers gemäß einem Ausführungsbeispiel, bei dem Schaltelemente aus Fig. 2 durch Dioden ersetzt sind;

Fig. 6b Verläufe für den Spulenstrom und die Gate-Signale für die unidirektionale Variante der Fig. 6a aufbauend auf den Darstellungen der Fig. 3 und 4, gemäß einem Ausführungsbeispiel;

Fig. 6c eine schematische Darstellung für den Spulenstrom aus Fig. 3 bei einer erfindungsgemäßen Ansteuerung eines variierten Freilaufintervalls;

Fig. 7a-b schematische Diagramme zur Erläuterung einer Möglichkeit zur Fehlererkennung beim Ausschalten eines Schaltelementes des Freilaufpfades eines Gleichspannungswandlers gemäß einem Ausführungsbeispiel;

Fig. 8a-b schematische Diagramme zur Erläuterung einer Möglichkeit zur Fehlererkennung beim Ausschalten eines anderen Schaltelementes des Freilaufpfades eines Gleichspannungswandlers gemäß einem Ausführungsbeispiel;

Fig. 9a-b schematische Diagramme zur Beschreibung einer möglichen die Fehlererkennung beim Einschalten eines zweiten Schaltungspfades gemäß einem Ausführungsbeispiel;

Fig. 10a-b schematische Diagramme zur Beschreibung einer möglichen die Fehlererkennung beim Einschalten eines ersten Schaltungspfades gemäß einem Ausführungsbeispiel; und

Fig. 11    eine beispielhafte Tabelle zum Aufschlüsseln von Entscheidungsbedingungen für die Fehlererkennung bzw. Fehlerlokalisation anhand des Spannungsabfalls in einem erfindungsgemäßen Gleichspannungswandler.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

Nachfolgend beschriebene Ausführungsbeispiele werden im Zusammenhang mit einer Vielzahl von Details beschrieben. Ausführungsbeispiele können jedoch auch ohne diese detaillierten Merkmale implementiert werden. Des Weiteren werden Ausführungsbeispiele der Verständlichkeit wegen unter Verwendung von Blockschaltbildern als Ersatz einer Detaildarstellung beschrieben. Ferner können Details und/oder Merkmale einzelner Ausführungsbeispiele ohne Weiteres mit einander kombiniert werden, solange es nicht explizit gegenteilig beschrieben ist.

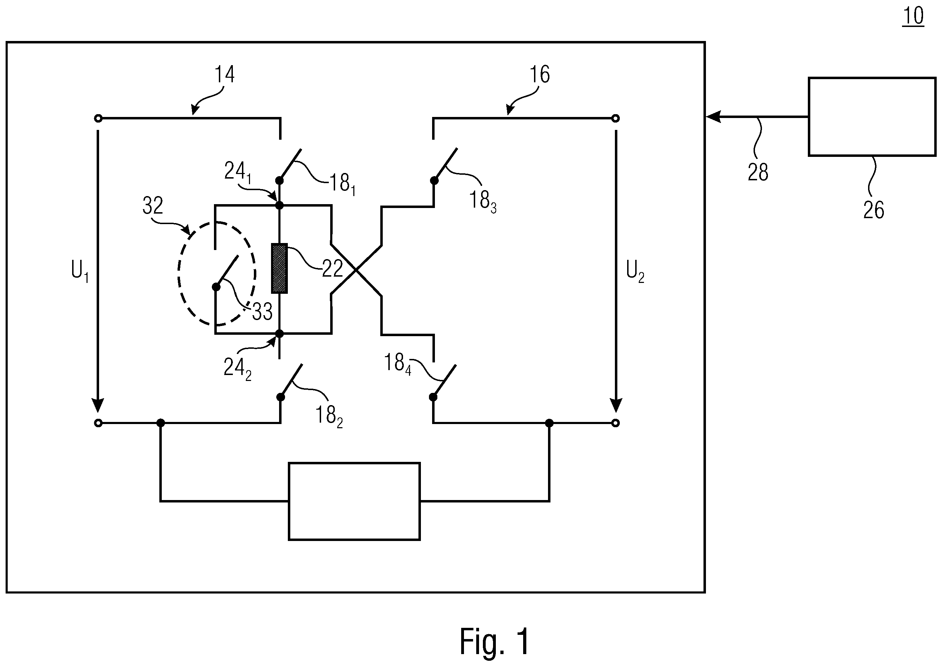

Fig. 1 zeigt ein schematisches Blockschaltbild eines Gleichspannungswandlers 10 gemäß einem Ausführungsbeispiel. Der Gleichspannungswandler 10 umfasst eine Wandlerschaltung 12 mit einem ersten Schaltungspfad 14 und einem zweiten Schaltungspfad 16. Der Schaltungspfad 14 umfasst einen Schaltungspfad mit seriell zueinander geschalteten schaltbaren Elementen $18_1$ und $18_2$, die beispielsweise mechanische Schalter aber bevorzugt Halbleiterschalter wie Transistoren, etwa Bipolartransistoren, IGBT oder MOSFET, umfassen. IGBT und Bipolartransistoren sind in der Regel nicht entlang einer zweiten Richtung leitfähig, weshalb diese mit einer antiparallel geschalteten Diode kombiniert werden können, welche im Falle eines MOSFET ganz oder teilweise durch eine monolithische Body-Diode verwirklicht werden kann. Die Schaltungspfade 14 und 16 sind durch ein induktives Element miteinander gekoppelt, etwa indem Koppelstellen $24_1$ und $24_2$ des ersten Schaltungspfades 14 zwischen dem schaltbaren Element $18_1$ und dem induktiven Element 22 einerseits bzw. zwischen dem schaltbaren Element $18_2$ und dem induktiven Element 22 jeweils kreuzweise mit dem schaltbaren Element $18_4$ bzw. $18_3$ gekoppelt sind. Der zweite Schaltungspfades 16 ist beispielsweise aber nicht notwendigerweise durch zwei schaltbare Elemente $18_3$ und $18_4$ gebildet, die seriell zueinander verschaltet sind. Es wird an dieser Stelle darauf hingewiesen, dass die schaltbaren Elemente $18_3$ und $18_4$ nicht notwendigerweise schaltbar sind, sondern dass auch andere ihre leitende Eigenschaft in der Schaltung ändernde Elemente eingesetzt werden können, beispielsweise Dioden, welche abhängig von der jeweiligen Stromflussrichtung ihre Leitfähigkeit ändern.

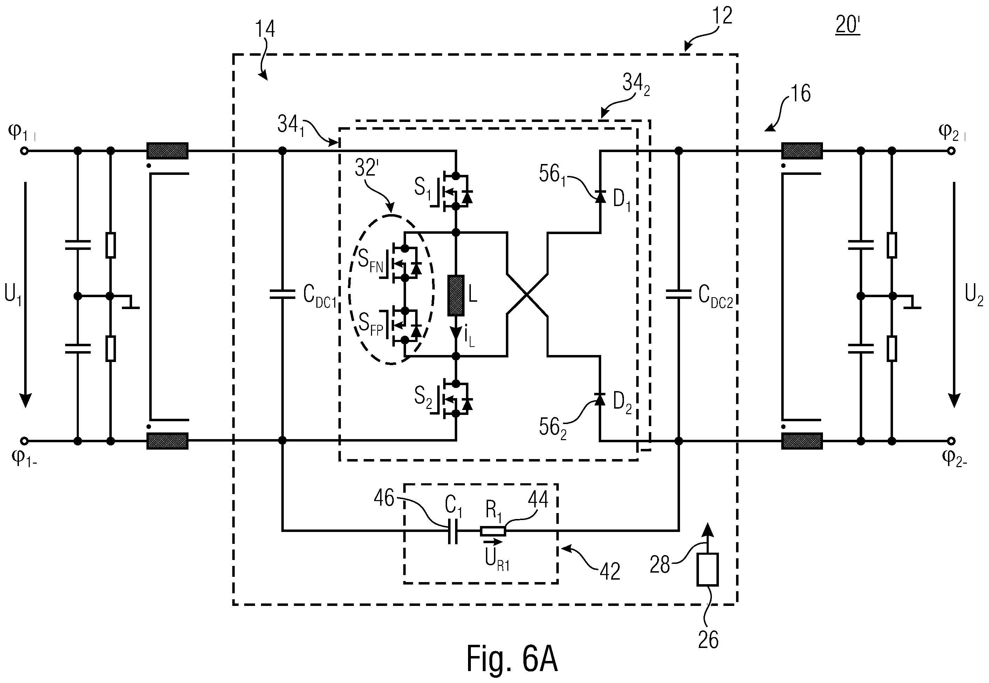

Der Gleichspannungswandler umfasst eine Steuerungseinrichtung 26, die ausgebildet ist, um zumindest den Schaltungspfad 14 zu schalten, etwa indem ein Zustand der schaltenden Elemente $18_1$ und $18_2$ basierend auf einem Steuerungssignal 28 der Steuerungseinrichtung 26 angepasst wird. Im Falle einer Implementierung oder Anordnung der schaltbaren Elemente $18_3$ und $18_4$ im Schaltungspfad 16 kann die Steuerungseinrichtung 26 ausgebildet sein, um auch diese Elemente zu steuern. Es liegt aber ebenso im Rahmen von Ausführungsbeispielen, dass der zweite Schaltungspfad 16 zwischen einer leitenden und einer sperrenden Eigenschaft aufgrund einer wechselnden Richtung anliegender Spannungen und/oder Ströme wechselt, etwa indem gemäß den Ausführungen zur Fig. 6a Dioden eingesetzt werden.

Der Gleichspannungswandler umfasst einen schaltbaren Freilaufpfad 32, der parallel zu dem induktiven Element 22 gekoppelt ist. Die Steuerungseinrichtung 26 ist ausgebildet, um den schaltbaren Freilaufpfad 32 zeitweise in einem Freilaufintervall zum Freilauf des Spulenstroms leitend zu schalten, was beispielsweise dazu führen kann, dass die Mittenabgriffe $24_1$ und $24_2$ kurzgeschlossen werden oder zumindest mit eigenem ohmschem Widerstand verbunden werden. Hierdurch kann in dem induktiven Element 22 befindlicher elektrischer Strom abgebaut werden.

Der schaltbare Freilaufpfad 32 umfasst ein schaltbares Element 33, welches beispielsweise von der Steuerungseinrichtung 26 angesteuert werden kann und hinsichtlich einer zumindest unidirektionalen aber bevorzugt bidirektionalen Leitfähigkeit gesteuert werden kann. Es ist ebenso möglich, eine höhere Anzahl als ein schaltbares Element zu verwenden, etwa um eine Mehrzahl von unidirektional steuerbaren Elementen antiseriell zu verschalten.

Der Gleichspannungswandler ist so ausgestaltet, dass der erste Schaltungspfad während eines ersten Zeitintervalls leitend ist und der zweite Schaltungspfad während eines disjunkten zweiten Zeitintervalls leitend ist, wobei zwischen dem ersten Zeitintervall und dem zweiten Zeitintervall, ein zeitlicher Abstand liegt. Entsprechend kann alternativ oder zusätzlich auch zwischen dem zweiten Zeitintervall und dem ersten Zeitintervall bzw. gleichbedeutend einem weiteren, dritten Zeitintervall, in dem korrespondierend zum ersten Zeitintervall gesteuert wird, ein zeitlicher Abstand angeordnet sein, da die Ansteuerung der Elemente womöglich periodisch oder im periodischen Wechsel erfolgt. Das bedeutet, ein auf das dritte Zeitintervall folgendes viertes Zeitintervall kann in Übereinstimmung mit dem zweiten Zeitintervall gesteuert werden. Beispielhafte Ansteuerdiagramme sind in der Fig. 3, der Fig. 4, der Fig. 5 und Fig. 6b dargestellt. Dort ist erkennbar, dass das erste Zeitintervall beispielsweise zu einem Zeitpunkt $t_2$ endet und

das zweite Zeitintervall zu einem Zeitpunkt ts beginnt, wobei nach dem Zeitpunkt $t_2$ eine Kommutierungsdauer von in etwa 100 ns bis hin zu in etwa 1.000 ns abgewartet werden kann, bis in einem, rechtzeitig vor einer möglicherweise von einer Kommutierung benötigten Zeitdauer endenden Freilaufintervall 54 der Freilaufpfad 32 leitend ist.

Das bedeutet, nach einem Zeitintervall in welchem, der Schaltungspfad 14 leitend ist und deshalb entlang zumindest einer, bevorzugt beider Richtungen sperrend ist, aber bevor der zweite Schaltungspfad 16 leitend ist, also solange er (noch) sperrend ist, aufgrund aktiver Ansteuerung und/oder aufgrund von Dioden-Eigenschaften, kann die Steuerungseinrichtung 26 den Freilaufpfad leitend schalten und insbesondere bevor der zweite Schaltungspfad 16 leitend ist, den Freilaufpfad zumindest in der relevanten Stromflussrichtung wieder sperrend schalten. Hierdurch wird erreicht, dass während des zeitlichen Abstandes basierend auf dem Freilaufpfad ein Strom des induktiven Elementes 22 abfließen kann, was eine Belastung der Elemente der Schaltungspfade 14 und/oder 16 reduzieren kann. Ausführungsbeispiele sehen vor, dass zu jedem Zeitpunkt höchstens einer der beiden Schaltungspfade 14 oder 16 leitend ist.

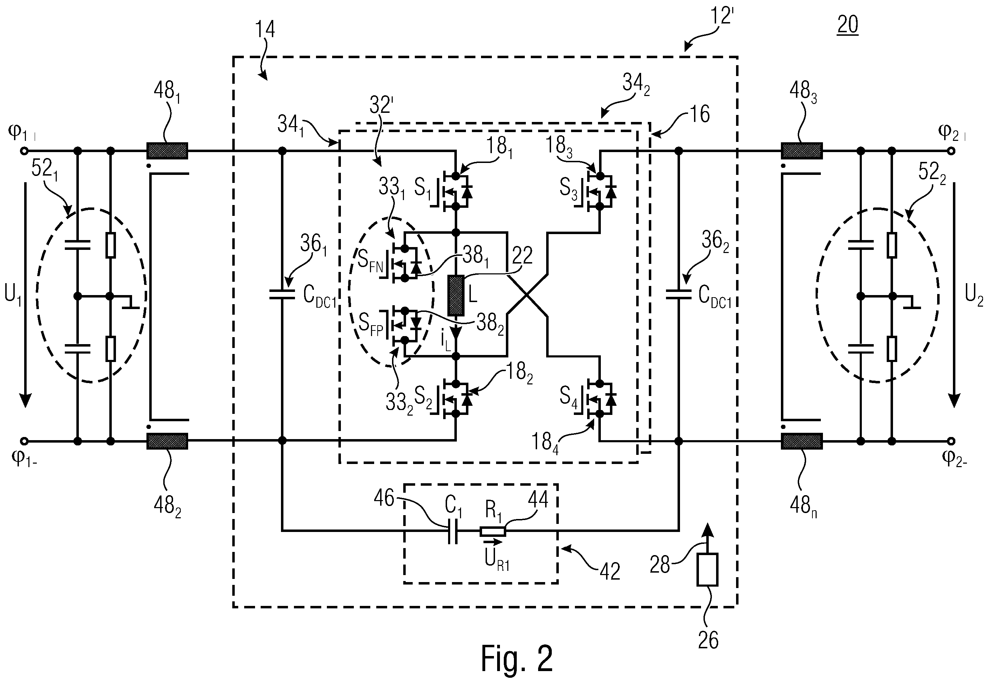

Fig. 2 zeigt ein schematisches Blockschaltbild eines Gleichspannungswandlers 20 gemäß einem Ausführungsbeispiel.

Eine gegenüber dem Gleichspannungswandler 10 mit zusätzlichen Details dargestellte Wandlerschaltung 12' des Gleichspannungswandlers 20 umfasst eine oder mehrere Phasenschaltungen $34_1$, $34_2$, ..., wobei die Anzahl der Phasenschaltungen beliebig zumindest 1, zumindest 2, zumindest 3 oder mehr betragen kann. Die Phasenschaltungen 34 können eingangsseitig und ausgangsseitig parallel zueinander geschaltet sein, um den durch den Gleichspannungswandler fließenden Gesamtstrom aufzuteilen und die Strombelastung in den jeweiligen Elementen somit gering zu halten. Alternativ oder zusätzlich kann es vorgesehen sein, den Ausgangsstrom kontinuierlich zu halten und/oder die Belastung der Kondensatoren des Gleichspannungswandlers zu reduzieren.

Die schaltenden Elemente $18_1$ bis $18_4$ sind beispielsweise MOSFET-Transistoren oder GaN-FETs und mit $S_1$, $S_2$, $S_3$ und $S_4$ bezeichnet. Durch das induktive Element 22, gekennzeichnet mit dem Symbol L, kann ein Spulenstrom $i_L$ fließen.

Zusätzlich dargestellt sind Zwischenkreiskapazitäten $36_1$ einer ersten Gleichspannungswandlerseite und $36_2$ einer zweiten Gleichspannungswandlerseite, die mit $C_{DC1}$ bzw. $C_{DC2}$ gekennzeichnet sind. Für den Zwischenkreis bzw. den Schaltungspfad 14 sind beispielhaft Potentiale $\varphi_{1+}$ und $\varphi_{1-}$ dargestellt, zwischen denen die Zwischenkreiskapazität $36_1$ angeordnet ist. In vergleichbarer Weise sind Potentiale $\varphi_{2+}$ und $\varphi_{2-}$ dargestellt, zwischen denen die Zwischenkreiskapazität $36_2$ angeordnet ist.

An einer ersten Seite kann eine Spannung U, und an einer zweiten Seite eine Spannung $U_2$ an dem Gleichspannungswandler 20 anliegen. Einer der beiden Spannungen $U_1$ und $U_2$ kann als Eingangsspannung und die jeweils andere als Ausgangsspannung bezeichnet werden, zwischen denen der Gleichspannungswandler 20 die Spannung wandelt.

Ein Freilaufpfad 32', der parallel zu dem induktiven Element 22 gekoppelt ist, umfasst beispielsweise zwei antiseriell miteinander verschaltete Halbleiterschalter $33_1$ und $33_2$, die beispielsweise in MOSFET-Konfigurationen implementiert sind und mit $S_{FN}$ sowie $S_{FP}$ gekennzeichnet sind.

Diese Konfiguration ermöglicht es, im Falle einer Sperrend-Schaltung beider schaltbarer Elemente $33_1$ und $33_2$ eine bidirektionale sperrende Eigenschaft basierend auf den Bodydioden/Body-Dioden $38_1$ und $38_2$ sowie den geöffneten Zuständen der leitenden Pfade zu erhalten. Im angesteuerten Zustand kann unter Umgehung der Body-Dioden $38_1$ und $38_2$ ein bidirektional leitfähiger Pfad erhalten werden.

Sowohl im Gleichspannungswandler 10 als auch im Gleichspannungswandler 20 kann erreicht werden, dass der Freilaufpfad 32 bzw. 32' in einem leitenden Zustand bidirektional leitend ist und in einem nichtleitenden Zustand bidirektional sperrend ist. Bei Verwendung lediglich eines Halbleiterschalters $33_1$ oder $33_2$ wird hingegen ein unidirektional sperrender Zustand in Kombination mit einem bidirektional leitenden Zustand erreicht.

Während der Gleichspannungswandler 10 mit möglicherweise einem einzelnen Schaltelement 33 bidirektional leitend und bidirektional nichtleitend geschaltet werden kann, ist im Gleichspannungswandler 20 die Verwendung eines ersten Schaltelements $33_1$ und eines zweiten Schaltelements $33_2$ vorgesehen, die im nichtleitenden Zustand jeweils unidirektional entlang unterschiedlicher Richtungen sperrend sind. Die Schaltelemente $33_1$ und $33_2$ sind so verschaltet, dass in dem nichtleitenden Zustand der Freilaufpfad entlang beider Richtungen, das heißt, bidirektional sperrend ist, wozu die Schaltelemente $33_1$ und $33_2$ antiseriell miteinander verschaltet werden.

Bevorzugt ist hierzu vorgesehen, dass die Halbleiterschalter benachbarte Drain-Anschlüsse bzw. benachbarte Kollektor-Anschlüsse aufweisen, je nach Implementierungsart der Halbleitertransistoren.

Unabhängig von der Implementierung des Freilaufpfades 32' und der Implementierung des Schaltungspfades 16 sowie anderer erfindungsgemäßer Weiterbildungen kann der Gleichspannungswandler 20 eine Detektionseinrichtung 42 umfassen, die mit den Schaltungspfaden 14 und 16 gekoppelt ist und ausgebildet ist, um eine Potentialänderung zwischen Schaltungspfad 14 und dem zweiten Schaltungspfad 16 zu erfassen. Eine derartige Potentialänderung zwischen den Schaltungspfaden 14 und 16 kann von der Steuerungseinrichtung 26 berücksichtigt werden, um basierend hierauf das Schalten zumindest des ersten Schaltungspfades also

des Schalters $18_1$ und/oder $18_2$ zu beenden. Bei einer Ausgestaltung des Schaltungspfades 16 bzw. des Schaltungspfades der Gestalt, dass diese schaltbaren Elemente, etwa die schaltbaren Elemente $18_3$ und $18_4$ aufweist, kann die Steuerungseinrichtung 26 ebenso eingerichtet sein, um basierend auf der erkannten Potentialänderung das Schalten dieser Elemente zu beenden, wobei es durchaus möglich ist, einen dann beibehaltenen sicheren Zustand des jeweiligen Elements anzusteuern, etwa einen sperrenden Zustand und dann die weitere Ansteuerung zu beenden.

Ein derartiges Ausführungsbeispiel löst ein weiteres Problem gegenüber dem Stand der Technik. Der kombinatorische Betrieb des schaltbaren Freilaufpfades und der Potentialänderungserkennung löst einerseits das Problem, dass im normalen Betrieb der Freilaufpfad eine Möglichkeit bietet, eine bestimmte Übergangszeit für die Stromkommutierung zwischen dem Aktivzustand der Schalter $S_{1/2}$ und $S_{3/4}$ zu gewährleisten. Dabei sind die Schaltelemente $S_1$ bis $S_4$ ausgeschaltet und gewährleisten die Isolation. Ein weiteres gelöstes Problem besteht darin, dass der Freilaufpfad eine von beiden Seiten entkoppelte Energiefreisetzungsstelle für die in der Spule gespeicherte Energie bietet, die auch nach der Fehlererkennung der Schaltelemente betriebsbereit ist. Dadurch ist die Isolation bei einem einfachen Fehler weiterhin zu gewährleisten.

In der Darstellung der Fig. 2 ist die Detektionseinrichtung 42 zwischen die Potentiale $\varphi_{1-}$ und $\varphi_{2-}$ gekoppelt. Alternativ können auch beliebige andere Konstellationen gewählt werden, etwa zwischen die Potentiale $\varphi_{1+}$ und $\varphi_{2+}$ sowie entsprechende Diagonalverbindungen der Potentiale $\varphi_{1+}$ und $\varphi_{2-}$ bzw. $\varphi_{1-}$ und $\varphi_{2+}$.

Basierend auf der Potentialänderung kann die Steuerungseinrichtung 26 ausgebildet sein, um den schaltbaren Freilaufpfad 32' leitend zu schalten. Die Detektionseinrichtung 42 kann ohne weiteres auch in dem Gleichspannungswandler 10 eingesetzt werden, wobei das schaltbare Element 32 im Falle einer erkannten Potentialänderung durch die Steuerungseinrichtung 26 leitend geschaltet werden kann.

Gemäß einer Ausgestaltung der Detektionseinrichtung 42 umfasst diese ein RC-Glied mit einem Widerstandselement 44, gekennzeichnet durch $R_1$, und einem kapazitiven Element 46, gekennzeichnet durch $C_1$. Die Detektionseinrichtung 46 ist ausgebildet, um einen Spannungsabfall $U_{R1}$ über dem Widerstandselement 44 und/oder einen Spannungsabfall über dem kapazitiven Element 46 zu erfassen, um die Potentialänderung zu erfassen. Beispielsweise kann eine Messeinrichtung der Detektionseinrichtung oder eine entsprechende Messeinrichtung der Steuerungseinrichtung 26 mit der Detektionseinrichtung 42 oder den Elementen 44 und/oder 46 gekoppelt sein, um die Potentialänderung zu erfassen.

In anderen Worten, um die beiden wesentlichen Gefahren beim Betrieb eines Gleichspannungswandlers zu vermeiden und den nachkommenden Einfluss zu verringern, sehen Ausführungsbeispiele vor, eine passende Schutzmaßnahme mit dem entsprechenden Erkennungsverfahren zu kombinieren und in einer Topologie für die Erkennung des Isolationsfehlers einzusetzen. Die Schutzmaßnahme ist in der Lage, den zufälligen Isolationsfehler während des Betriebs zu erkennen und den Einfluss auf einen kleinen lokalen Kreis in der Schaltung zu beschränken, indem der weitere Betrieb des Gleichspannungswandlers reduziert oder eingeschränkt wird.

Wird die Möglichkeit angewandt, mehrerer der Phasenschaltungen 34 in dem Gleichspannungswandler 20 einzusetzen, so sehen Ausführungsbeispiele vor, diese zeitversetzt zueinander anzusteuern, so dass zu jedem Zeitpunkt ein Pfad höchstens einer Wandlerschaltung geschaltet wird. Da das Schalten des Pfades zum Auftauchen mit bzw. zu einer Feststellbarkeit des Potentialunterschiedes an der Detektionseinrichtung 42 führen kann, kann aufgrund der zeitlichen Unterscheidbarkeit auch erkannt werden, welche der Phasenschaltungen 34 defekt behaftet ist. Die Detektionseinrichtung kann mit der Mehrzahl von Wandlerschaltungen gekoppelt sein, um eine Potentialänderung in jeder der Wandlerschaltungen eindeutig festzustellen. So kann beispielsweise eine Kontaktierung der Detektionseinrichtung 42 mit einer jeweilig gekoppelten Potentialstelle $\varphi_{1+}$ oder $\varphi_{1-}$ sowie $\varphi_{2+}$ oder $\varphi_{2-}$ und entsprechend der gewählten Parallelverschaltung erfolgen. Dies ermöglicht es, mit einer Detektionseinrichtung mehrere Phasenschaltungen 34 zu überwachen.

Alternativ oder zusätzlich kann für eine Mehrzahl von Wandlerschaltungen als Phasenschaltungen 34 eine korrespondierende Mehrzahl von Detektionseinrichtungen 42 eingesetzt werden, die jeweils mit einer aus der Mehrzahl von Wandlerschaltungen zum Überwachen derselben gekoppelt ist. Dies kann auch miteinander kombiniert werden, so dass unterschiedliche Wandlerschaltungen bzw. Phasenschaltungen mit einer individuellen Detektionseinrichtung gekoppelt sind und andere Wandlerschaltungen bzw. Phasenschaltungen gruppenweise überwacht werden.

Für den Fall, dass eine Potentialänderung vermittels der Detektionseinrichtung 42 erkannt wird, kann die Steuerungseinrichtung 26 ausgebildet sein, um alternativ oder zusätzlich zu einem Einstellen des Schaltens eines oder mehrerer der schaltbaren Elemente in den Schaltungspfaden 14 und 16 den Freilaufpfad 32 leitend zu schalten.

Darüber hinaus kann die Steuerungseinrichtung ausgebildet sein, um die betriebsbereiten verbleibenden Schaltelemente der Schalter $S_1$ bis $S_4$ zu öffnen, das heißt, sperrend zu schalten. Ist eines dieser Schaltelemente aufgrund eines Defekts nicht ausschaltbar, so verbleiben die drei Restschalter im sperrenden Zustand und gewährleisten insofern die Isolation zwischen den DC-Netzen.

Gemäß einer Ausführungsform versucht die Steuerungseinrichtung 26 aber bei einer erkannten Potentialänderung den Schaltungspfad 14 und/oder den Schaltungspfad 16 sperrend zu schalten, das heißt, Elemente $18_1$, $18_2$, $18_3$ und/oder $18_4$ soweit steuerbar und soweit nicht defekt in einen geöffneten Zustand zu steuern.

In anderen Worten ermöglichen es Ausführungsbeispiele, einen bidirektionalen Schalter als einen vorgegebenen lokalen Freilaufkreis oder Freilaufpfad und eine Potentialverschiebungserkennung als die Fehlererkennung in eine Gleichspannungswandlertopologie einzuführen. Dies ist in der Fig. 2 dargestellt. Zwei DC-Netze 14 und 16 befinden sich dort an der linken bzw. rechten Seite, deren Spannungen $U_1$ und $U_2$ entsprechen. Die zwei an den DC-Netzen angeschlossenen Zwischenkreiskondensatoren $C_{DC1}$ und $C_{DC2}$ können zwei entsprechende Zwischenkreise für die Schaltung des DC/DC-Wandlers erzeugen. Die stromkompensierten Spulen $48_1$ bis $48_4$ sowie Erdungseinrichtungen $52_1$ und $52_2$ zum Beispiel als hochohmscher Widerstand und Erdungskapazität können als zum Standardaufbau eines DC/DC-Wandlers und dem DC-Netz betrachtet werden.

Hinsichtlich des Aufbaus der Topologie ist es bevorzugt, wenn die Betriebsbedingungen $\varphi_{1+} > \varphi_{2-}$ und $\varphi_{2+} > \varphi_{1-}$ erfüllt werden, da ansonsten der dargestellte DC/DC-Wandler seine Isolationsfähigkeit zwischen den beiden DC-Netzen verliert. Grund hierfür sind die Body-Dioden bzw. Freilaufdioden der Schaltelemente.

Die Wandlerschaltung 12' umfasst dabei Hauptaspekte vorliegender Ausführungsbeispiele. Sie enthält ein oder mehrere Phasenschaltungen 34, die Detektionseinrichtung 42 und das Steuerwerk bzw. die Steuerungseinrichtung 28. Bei Verwendung mehrerer Phasenschaltungen in einer mehrphasigen Anwendung können die Anzahl der Phasenschaltungen 34 verschachtelt getaktet werden.

In dem gezeigten aber nicht einschränkenden Ausführungsbeispiel umfasst jede Phasenschaltung 34 vier Schaltelemente $S_1$, $S_2$, $S_3$, $S_4$, eine Spule L und den an der Spule parallel angeschlossenen bidirektionalen Schalter, den Freilaufpfad 32 oder 32'. In einer möglichen Ausgestaltung umfasst der Freilaufpfad 32' zwei antiseriell geschaltete Schaltelemente $S_{FP}$ und $S_{FN}$. Der bidirektionale Schalter kann durch die Ansteuerung der entsprechenden Gate-Signale die Spannung und den Strom von einer selektierten Richtung oder beiden Richtungen sperren oder leiten.

Durch den Freilaufpfad 32 wird ermöglicht, dass eine Möglichkeit in der Schaltung erhalten wird, den Spulenstrom $i_L$ in einem von den beiden Schaltungspfaden 14 und 16 unabhängigen Potential getrennten lokalen Kreis freizulaufen. Alle Schaltelemente können unabhängig voneinander implementiert werden und sind bevorzugt Halbleiterschalter, etwa MOSFETs oder GaN-FETs, wobei diese vorteilhaften Ausgestaltungen nicht limitierend sind.

Die Schaltelemente $S_1$, $S_2$ einerseits sowie $S_3$ und $S_4$ andererseits können als zwei Schaltgruppen zugehörig betrachtet werden, wobei in jeder Gruppe die Schaltelemente auf Logikebene möglichst synchron oder gleichzeitig geschaltet werden können, wenngleich dies in der realen Schaltungsausführung auch zeitliche Verzögerungen beinhalten kann, etwa durch Bauteilabweichungen oder unterschiedliche Leitungslängen. Für eine vereinfachte Darstellung werden die Schaltelemente $S_1$, $S_2$ hierin auch als $S_{1/2}$ und die Schaltelemente $S_3$, $S_4$ als $S_{3/4}$ gruppiert benannt.

Im normalen Betrieb kann der bidirektionale Schalter zwischen jedem Schaltintervall von den Schaltelementen $S_{1/2}$ und $S_{3/4}$ aktiviert werden. Während eines aktivierten Intervalls fließt der Spulenstrom $i_L$ durch den bidirektionalen Schalter in einen Freilaufschritt bzw. durch den Freilaufpfad. Dadurch ist ein ausreichendes Zeitintervall, in der Regel von einigen 100 ns bis hin zu μs, für eine Bestätigung des Ausschaltens in den Schaltelementen $S_1$, $S_2$, $S_3$ und $S_4$ gewährleitstet und die von der ungleichmäßigen Ausschaltverzögerung der Schaltelemente verursachte Diagonalverbindung wird eliminiert bzw. deren Auswirkung neutralisiert.

Als eine Möglichkeit zur Fehlererkennung überwacht die Potentialverschiebungserkennung bzw. Detektionseinrichtung 42 die Potentialverschiebung zwischen den beiden Schaltungspfaden 14 und 16. Falls eine schlagartige Potentialverschiebung bei der entsprechenden Aktivierung der Gate-Signale des Schaltelementes auftritt und in einiger Zeit, etwa einigen 100 ns, immer noch fortbesteht bzw. andauert, kann die Steuerungseinrichtung 26 oder eine Auswerteeinheit der Detektionseinrichtung 42 einen Fehler detektieren, etwa eine Diagonalverbindung der Schaltungspfade. Basierend hierauf kann das Schutzverfahren ausgeführt werden, möglichst zeitnah, insbesondere bevorzugt sofort und zügig. Dies kann umfassen, dass der bidirektionale Schalter bzw. der Freilaufpfad dauerhaft eingeschaltet wird, das heißt, leitend wird und die Schaltelemente $S_1$, $S_2$, $S_3$ und $S_4$ ausgeschaltet bzw. geöffnet geschaltet werden und dauerhaft im ausgeschalteten Zustand bleiben.

Durch eine solche erfindungsgemäße Schutzmaßnahme kann der Einfluss eines fehlerhaften Schaltelements in einen lokal beschränkten Bereich eingehegt werden. Beim Ausfall eines der Schaltelemente $S_1$-$S_4$ können die drei bestehenden oder weiter betreibbaren Schaltelemente die Isolationsfähigkeit zwischen den beiden DC-Systemen ermöglichen bzw. beibehalten. Der in der Spule gespeicherte Strom bzw. die enthaltene Energie kann durch den Freilauf langsam in dem bidirektionalen Schalter freigesetzt werden.

Ausführungsbeispiele sehen vor, das fehlerhafte Schaltelement durch das Vorzeichen der Potentialverschiebung und die Gate-Signale, das heißt, die Ansteuerung der Steuerungseinrichtung 26 zu diagnostizieren.

Gemäß Ausführungsbeispielen ist eine Steuerungseinrichtung eines hierin beschriebenen Gleichspannungswandlers ausgebildet, um den Gleichspannungswandler in zumindest eines aus einem kontinuierlichen Betrieb, CCM, einem diskontinuierlichen Betrieb, DCM, einem trapezförmigen Betrieb mit wechselndem Vorzeichen des Spulenstroms, TraCM und einem Grenzbetrieb, BCM, zu steuern. Die Steuerungseinrichtung kann ausgebildet sein, um einen der Betriebsarten unveränderlich zu fahren oder zu betreiben oder um zwischen einem oder mehreren der Betriebsarten zu wechseln.

Fig. 3 zeigt ein beispielhaftes Zeitdiagramm auf einer übereinstimmenden Zeitachse t für eine Ansteuerung der Elemente $S_{1/2}$, $S_{3/4}$ sowie der mit $S_{FP}$ und $S_{FN}$ bezeichneten Schaltelemente $33_1$ bzw. $33_2$ des Freilaufpfades 32'. Darüber hinaus ist ein Verlauf des Spulenstroms $I_L$ gezeigt, wobei auch eine Obergrenze OG und eine Untergrenze UG beschrieben ist.

Um einen geringen Schaltverlust zu realisieren, kann die hierin beschriebene Topologie in einem trapezförmigen Strombetrieb, TraCM, betrieben werden. Dabei können einige oder gar alle der Schaltelemente in einem weichen Schalten bzw. einem sogenannten Nullspannungsschalten (engl.: Zero Voltage Switching), ZVS, betrieben werden. In dem in der Fig. 3 dargestellten Beispiel ist ein Stromverlauf und die Gate-Signale der Schaltelemente zum Erhalt des TraCM gezeigt. Es ist zu erkennen, dass das Vorzeichen des Spulenstroms $i_L$ in jeder Schaltperiode abwechselt, das bedeutet, eine Stromflussrichtung ändert sich, wofür ein bidirektional leitender und ein bidirektional sperrender Freilaufpfad vorteilhaft angewendet wird.

Eine mögliche Schaltreihenfolge ist wie folgt: Zum Zeitpunkt $t_0$ beginnt eine beispielhafte Schaltperiode. Das Schaltelement $S_{FN}$ wird ausgeschaltet, der Freilaufschritt bzw. das durch ein Leitend-Schalten der Schalter $S_{FP}$ und $S_{FN}$ bestimmte Freilaufintervall $54_0$ wird beendet oder abgebrochen. Jetzt lädt der Spulenstrom $i_L$ die Sperrschichtkapazität des Schaltelementes $S_{FN}$ auf und fließt weiter durch die Dioden der Schaltelemente $S_1$ und $S_2$ in den Zwischenkreis bzw. U, in Fig. 2.

Die Zeitintervalle $[t_0, t_1]$, $[t_2, t_3]$, $[t_4, t_5]$ und $[t_6, t_7]$ können als technisch eingestellte Totzeit betrachtet werden, die das Einschalten der Schaltelemente für den nächsten Schritt verzögert und berücksichtigt, dass inzwischen die Sperrschichtkapazität der Schaltelemente durch den in passender Richtung fließenden Spulenstrom $i_L$ für das Nullspannungsschalten umgeladen wird.

Im Zeitintervall $[t_1, t_2]$ werden die Schaltelemente $S_{1/2}$ eingeschaltet, während des Zeitintervalls wird der Spulenstrom anhand der Zwischenkreisspannung $U_1$ aufgebaut.

Zum Zeitpunkt $t_2$ können die Schaltelemente $S_{1/2}$ ausgeschaltet werden. Jetzt fließt der Spulenstrom $i_L$ durch die Schaltelemente $S_{FP}$ und $S_{FN}$ in einem Freilaufschritt bzw. einem Freilaufintervall 54,. Obwohl die Schaltelemente $S_{1/2}$ gleichzeitig oder auch leicht verzögert, also nicht gleichzeitig ausgeschaltet werden, wird die aktive Verbindung zwischen den beiden Schaltungspfaden 14 und 16 unterbrochen.

Das Zeitintervall $[t_2, t_4]$ kann dem Freilaufschritt bzw. dem Freilaufintervall $54_1$ entsprechen, inzwischen bleiben die Schaltelemente $S_1$, $S_2$, $S_3$ und $S_4$ in einem ausgeschalteten bzw. sperrenden Zustand. In dieser Zeit ist das Potential der Spule L bzw. des induktiven Elementes 22 von beiden Schaltungspfaden aktiv getrennt.

Zum Zeitpunkt $t_4$ kann das Schaltelement $S_{FP}$ ausgeschaltet werden. Jetzt lädt der Spulenstrom $i_L$ die Sperrschichtkapazität des Halbleiterschalters $33_2$ auf und danach fließt der Spulenstrom $i_L$ durch die Dioden der Schaltelemente $S_{3/4}$ in den Zwischenkreis $U_2$ bzw. den Schaltungspfad16.

Im Zeitintervall $[t_5, t_6]$ können die Schaltelemente $S_{3/4}$ eingeschaltet werden, während des Zeitintervalls wird der Spulenstrom anhand der Zwischenkreisspannung $U_2$ abgebaut.

Zum Zeitpunkt $t_6$ werden die Schaltelemente $S_{3/4}$ ausgeschaltet. Jetzt fließt der Spulenstrom $i_L$ durch die Schaltelemente $S_{FP}$ und $S_{FN}$ in einem Freilaufschritt, da zum Zeitpunkt $t_7$ das Element $F_{FP}$ wieder leitend geschalten wird.

Das Zeitintervall $[t_6, t_0^*]$ entspricht einem Freilaufschritt $54_2$, inzwischen bleiben die Schaltelemente $S_1$, $S_2$, $S_3$ und $S_4$ in dem ausgeschalteten Zustand. In dieser Zeit ist das Potential der Spule L von beiden Schaltungspfaden aktiv getrennt. Der Freilaufpfad kann durch Ansteuerung der antiparallelen Schalter in die Zustände 1) komplett oder bidirektional leitend, 2) komplett oder bidirektional sperrenden, 3) entlang einer ersten Richtung unidirektional leitend und 4) entlang einer entgegengesetzten zweiten Richtung unidirektional leitend konfiguriert werden. Die unidirektional leitenden Zustände 3) und 4) verhalten sich zueinander möglicherweise wie eine bezüglich ihrer Polarisation oder eine Diode mit einstellbarer Sperrrichtung, die den Strom in eine ausgewählte Richtung leiten kann. Dieser unidirektional leitfähige Zustand wird vorteilhaft eingesetzt, um im Falle des in Fig. 3 beschriebenen Trapezbetriebes den Freilaufpfad womöglich nicht bidirektional leitend zu schalten, sondern um den Freilaufpfad als Diode mit wechselnder Sperrrichtung zu schalten. Es ist möglich, das Schaltelement $S_{FN}$ bei einem positiven Spulenstrom sperrend zu schalten und bei einem negativen Spulenstrom das Schaltelement $S_{FP}$ sperrend zu schalten. Die Freilaufintervalle 54 können dabei als vom Ausschalten des vorherigen ersten oder zweiten Schaltungspfads bis zum Ausschalten einer der bidirektionalen Schaltern dauernd angesehen werden, da der Anfang des Nullspannungsschaltens von beiden Schaltungspfaden als einem Freilaufschritt zugehörig betrachtet werden.

Zum Zeitpunkt tö kann eine nächste bzw. darauffolgende Schaltperiode anfallen, die Schaltelemente werden aufgrund der Schaltreihenfolgen weiterhin angesteuert. Das bedeutet, es kann eine wiederholte und/oder periodische Ansteuerung erfolgen. Der erste Schaltungspfad ist während eines ersten Zeitintervalls zwischen $t_1$ und $t_2$ leitend und der zweite Schaltungspfad ist während eines disjunkten zweiten Zeitintervalls zwischen $t_5$ und $t_6$ leitend. Zwischen dem Ende des ersten Zeitintervalls und dem Beginn des zweiten Zeitintervalls und/oder, insbesondere unter Beachtung der möglicherweise periodischen Ansteuerung der Elemente, zwischen dem Ende des zweiten Zeitintervalls und dem Beginn eines weiteren Zeitintervalls während dem der erste Schaltungspfad nach dem Zeitpunkt $t_0^*$ leitend geschaltet wird, was auch als erneutes erstes Zeitintervall oder als drittes Zeitintervall bezeichnet werden kann, kann ein zeitlicher Abstand ($t_5$-$t_2$ und/oder $t_0^*$-$t_6$) liegen, der für das leitend Schalten des Freilaufpfades genutzt werden kann. Die Ansteuerung des Gleichspannungswandlers kann dabei periodisch, möglicherweise mit veränderlicher Periodendauer erfolgen.

Es ist vorteilhaft, das Schaltelement $S_{FP}$ vor dem Ausschalten der Schaltelemente $S_{1/2}$ zum Zeitpunkt $t_2$ einzuschalten und zum Zeitpunkt $t_4$ zum Abbrechen eines Freilaufschrittes auszuschalten. In einer realen Implementierung kann das Einschalten des Schaltelementes $S_{FP}$ zwischen dem Zeitpunkt $t_7$ der letzten Schaltperiode und dem Zeitpunkt $t_2$ betätigt werden. Insbesondere, um den leitenden Verlust im bidirektionalen Schalter während des Freilaufschrittes zu reduzieren und eine Steuerlogik zu vereinfachen, kann das Schaltelement $S_{FP}$ zwischen dem Zeitpunkt $t_7$ der vorangehenden Schaltperiode und dem Zeitpunkt $t_4$ der aktuellen Schaltperiode in dem eingeschalteten Zustand verbleiben.

Aufgrund des gleichen Prinzips ist das Schaltelement $S_{FN}$ vor dem Ausschalten der Schaltelemente $S_{3/4}$ zum Zeitpunkt $t_6$ einzuschalten und am Zeitpunkt $t_0^*$ der nächsten Schaltperiode zum Abbrechen eines Freilaufschrittes auszuschalten. In einer realen Implementierung kann das Einschalten des Schaltelementes $S_{FN}$ im Zeitintervall [$t_3$, $t_6$] betätigt werden. Insbesondere, um den leitenden Verlust im bidirektionalen Schalter, dem Freilaufpfad, während des Freilaufschrittes zu reduzieren oder gering zu halten und eine Steuerlogik zu vereinfachen, kann das Schaltelement $S_{FN}$ zwischen den Zeitpunkten $t_3$ der aktuellen Zeitperiode und dem Zeitpunkt $t_0^*$ der darauffolgenden Schaltperiode in dem eingeschalteten Zustand verbleiben.

Im trapezförmigen Strombetrieb ist ein Vorzeichen wechselnder Spulenstrom $i_L$ vorgesehen. Die Richtung und Leistung einer Energieübertragung können von den Größen der oberen und unteren Stromgrenze $i_{LOG}$ und $i_{LUG}$ mit $i_{LOG} > 0$, $i_{LUG} < 0$ festgelegt sein.

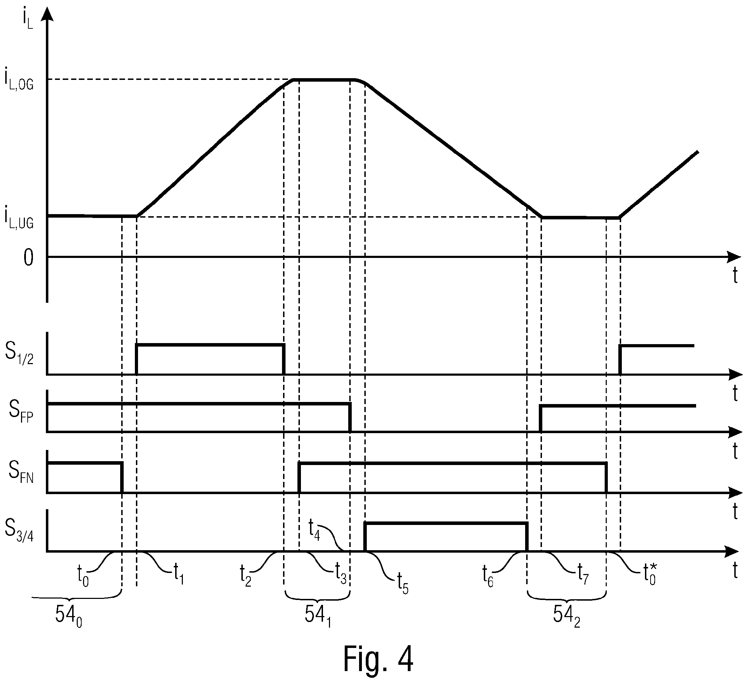

In den Fig. 3 und 4 sind die Schaltelemente $S_{3/4}$ im Zeitraum zwischen den Zeitpunkten $t_5$ und $t_6$ aktiv leitend. Der Unterschied zwischen den Zyklen der Fig. 3 und 4 ist, dass sich der Spulenstrom beim beschriebenen weichen Schalten (ZVS) nach dem Ausschalten der Schaltelemente automatisch in den nächsten Schritt leitet, siehe Fig. 3. Wie in Fig. 4 gezeigt, werden zum Zeitpunkt $t_6$ die Schaltelemente $S_{3/4}$ ausgeschaltet. Dort geht nun aber der Spulenstrom noch in positive Richtung, d. h., der Spulenstrom weist noch ein positives Vorzeichen auf, deshalb leitet der Spulenstrom weiter durch die Body-Diode von $S_{3/4}$. Zum Zeitpunkt $t_7$ wird das Schaltelement $S_{FP}$ in der Freilaufschaltung eingeschaltet, nun wird der Spulenstrom dann mit einem harten Schalten in der Freilaufschaltung kommutiert. In der unidirektionalen Variante, die im Zusammenhang mit der Fig. 6a beschrieben ist, arbeitet ein derartiger Betrieb unter Verwendung der Dioden $D_{1/2}$ unter dem gleichen Prinzip in einem CCM-Betrieb.

Fig. 4 zeigt ein beispielhaftes Zeitdiagramm von Ansteuersignalen der Schalter $S_1$-$S_4$ sowie der Schalter des Freilaufpfades 32' aus Fig. 2 bei einem kontinuierlichen Strombetrieb ($i_{LUG} > 0$), CCM, und einem diskontinuierlichen Strombetrieb ($i_{LUG} = 0$), DCM. Während in Fig. 3 der TraCM-Betrieb mit einem auch in negativer Richtung fließendem Spulenstrom gezeigt ist, ist in Fig. 4. ist ein regulärer CCM-Betrieb gezeigt, der vergleichbar mit einer unidirektionalen Variante ist.

Im kontinuierlichen Betrieb, CCM, tragen die obere und die untere Stromgrenze ein gleiches Vorzeichen innerhalb einer Schaltperiode. Dabei ist das Kriterium für das weiche Schalten, ZVS, nicht bei jedem Schaltvorgang erfüllt, deshalb schalten einige Schaltelemente mit einem harten Schaltvorgang.

In Fig. 4 sind die Verläufe des Spulenstrom $i_L$ und der Gate-Signale für einen positiven kontinuierlichen Spulenstrom gezeigt. Dabei tauchte der wesentliche Unterschied gegenüber dem trapezförmigen Strombetrieb aus Fig. 3 mit Nullspannungsschalten beim Ausschalten des Schaltelementes $S_{FN}$ zum Zeitpunkt $t_0$ und der Schaltelemente $S_{3/4}$ zum Zeitpunkt $t_6$ auf. Da der transiente Spulenstrom $i_L$ noch ein positives Vorzeichen aufweist, ist das Kriterium für die kapazitive Kommutierung (Nullspannungsschalten) nicht erfüllt, nach deren Ausschalten fließt der Spulenstrom weiter durch deren Diode. Die Stromkommutierung erfolgt dann beim Einschalten der Schaltelemente $S_{1/2}$ zum Zeitpunkt $t_1$ und des Schaltelementes $S_{FP}$ zum Zeitpunkt $t_7$. Insbesondere zum Zeitpunkt $t_1$ schalten die Schaltelemente $S_{FN}$, $S_{1/2}$ unter hartem Schalten und zum Zeitpunkt $t_7$ schalten die Schaltelemente $S_{FP}$ und $S_{3/4}$ unter hartem Schalten.

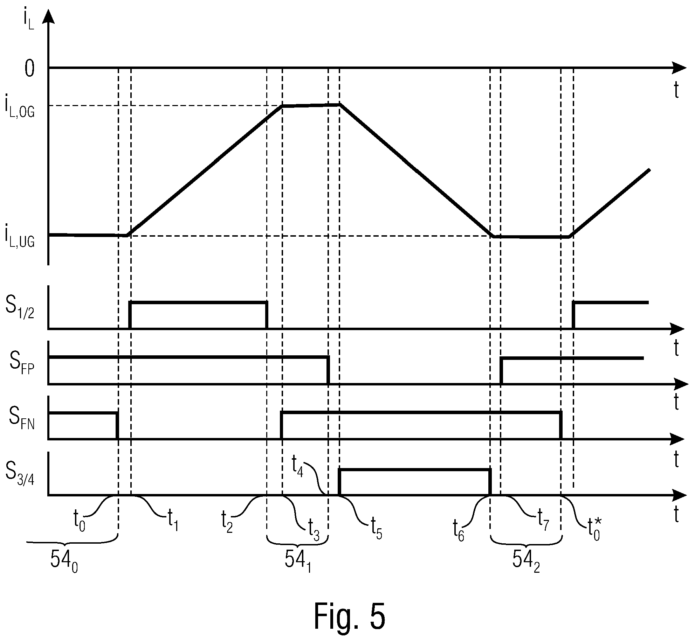

Für einen negativen kontinuierlichen Spulenstrom zeigt Fig. 5 eine schematische beispielhafte Darstellung der Ansteuersignale der Schaltelemente $S_1$-$S_4$ sowie der Schaltelemente des Freilaufpfades 32' zusammen mit einem beispielhaften schematischen Verlauf des Spulenstroms $i_L$. Hier erfolgt das harte Schalten beim Einschalten des Schaltelementes $S_{FN}$, $S_{1/2}$ zum Zeitpunkt $t_3$ und der Schaltelemente $S_{FP}$ und $S_{3/4}$ zum Zeitpunkt $t_5$.

Es ist möglich, das Schaltelement $S_{FN}$ für einen kontinuierlich positiven Spulenstrom dauerhaft ausgeschaltet zu lassen, umgekehrt ist es möglich, das Schaltelement $S_{FP}$ für einen kontinuierlich negativen Spulenstrom dauerhaft auszuschalten. Im Falle einer statischen Implementierung eines Gleichspannungswandlers kann in Übereinstimmung mit Ausführungsbeispielen das jeweilige Element auch substituiert werden, beispielsweise durch eine Diode, die gemäß der Body-Diode des substituierten Elementes geschalten ist. Eine mögliche Steuerungsstrategie der Steuerungseinrichtung kann so ausgelegt sein, dass das mit $S_{FN}$ bezeichnete Schaltelement $33_1$ bei dem mit $i_L$ bezeichneten Spulenstrom ausgeschaltet werden kann, sobald dieser positiv (P) ist und das mit $S_{FP}$ bezeichnete Schaltelement $33_2$ kann bei dem mit $i_L$ bezeichneten Spulenstrom ausgeschaltet werden, sobald dieser negativ (N) ist, was in den Indizes $S_{FP}$ und $S_{FN}$ angezeigt ist. Das bedeutet, wenn der Spulenstrom kontinuierlich in eine Richtung (CCM) fließt, kann einer der beiden Transistoren $33_1$ und $33_2$ auch von einer aktiven Steuerungsstrategie ausgenommen werden, etwa da dessen Freilaufdiode (bei MOSFET Body-Diode) den Strom leiten kann. Damit kann die Steuerlogik vereinfacht werden. In Fig. 3 werden im Intervall $54_i$ die Transistoren $33_1$ und $33_2$ des Freilaufpfades für eine Optimierung der geringeren leitenden Verluste überlappend eingeschaltet.

Um aber den leitenden Verlust im Freilaufschritt zu reduzieren oder die Steuerlogik zu vereinfachen, kann der bidirektionale Schalter des Freilaufpfads auch mit der Steuerstrategie für den trapezförmigen Strombetrieb angesteuert werden.

Ein diskontinuierlicher Strombetrieb kann ein spezieller kontinuierlicher Strombetrieb sein, bei dem eine von den Stromgrenzen auf null gesetzt wird. Das Steuerungsverfahren für den kontinuierlichen Strombetrieb kann auch für den diskontinuierlichen Strombetrieb genutzt werden.

Fig. 6a zeigt ein schematisches Blockschaltbild eines Gleichspannungswandlers 20' gemäß einem Ausführungsbeispiel. Dieser entspricht im Wesentlichen in seinem Aufbau dem Gleichspannungswandler 20, wobei die Schaltelemente $18_3$ und $18_4$ des Gleichspannungswandlers 20 durch die Diodenelemente $56_1$ bzw. $56_2$ ersetzt sind, die jeweils hinsichtlich der Potentiale $\varphi_{2+}$ und $\varphi_{2-}$ in Sperrrichtung angeordnet sind. Dies kann als eine unidirektionale Variante des Gleichspannungswandlers 20 betrachtet werden und kann bei speziellen Anwendungen eingesetzt werden. In dieser Variante, bei der die Schaltelemente $S_{3/4}$ durch die Dioden $D_{1/2}$ ersetzt sind, ist zwar die bidirektionale Energieübertragung nicht vorgesehen, erlaubt dafür aber das Einsparen von Materialkosten hinsichtlich der Schaltelemente $S_{3/4}$.

Das Funktionsprinzip für die unidirektionale Variante des Gleichspannungswandlers 20' ist dabei gleich wie ein kontinuierlicher Strombetrieb oder ein diskontinuierlicher Strombetrieb in der bidirektionalen Topologie, deren Steuerungsverfahren ist deshalb direkt anwendbar.

Da die Schaltelemente $S_{3/4}$ durch Dioden $D_{1/2}$ ersetzt sind, werden die entsprechenden Gate-Signale der Fig. 4 und 5 nicht weiterverwendet.

Unter Verweis auf die Fig. 3, 4 und 5, kann die Steuerungseinrichtung ausgebildet sein, um das Freilaufintervall 54 in Zeiten zu schalten, in denen die Steuerungseinrichtung den Schaltungspfad 14 in einen sperrenden Zustand schaltet und der Schaltungspfad 16 sperrend ist. Der sperrende Zustand des Schaltungspfades 16 kann dabei aktiv durch entsprechende Ansteuerung vermittels der Steuerungseinrichtung gehalten werden, wie es beispielsweise in dem Gleichspannungswandler 20 implementiert ist. Im Gleichspannungswandler 20' sind jedoch Dioden verbaut. Diese können in der Regel nicht aktiv in den sperrenden Zustand geschaltet werden. Da aber die Freilaufschaltung bzw. der Freilaufpfad 32' den Spulenstrom aktiv kommutiert, sperren die Dioden $56_1$ und $56_2$ von sich aus, so dass der Schaltungspfad 16 sperrend ist.

In anderen Worten bildet die Topologie gemäß Fig. 6a in einer unidirektionalen Ausgestaltung eine Unterform der Variante gemäß der Fig. 2. Wie auch in der bidirektionalen Topologie des Gleichspannungswandlers 20 werden die Schaltelemente $S_{3/4}$ nicht aktiviert, sondern ihre Body-Diode leitet den Strom. Hinsichtlich des Kostenaufwands können $S_{3/4}$ durch Ersatz mittels Dioden $D_{1/2}$ für eine unidirektionale Anwendung ersetzt und der Wandler beispielsweise auch nur noch im CCM-Betrieb und/oder dem DCM-Betrieb betrieben werden, wo der Spulenstrom bis null abgebaut wird. Ansonsten können die Topologien einander gleich sein. Das Steuerungsverfahren kann ebenfalls gleich sein wie im normalen CCM-Betrieb (oder DCM-Betrieb). Ausgehend von der Fig. 4 können in einer Topologie gemäß der Fig. 6a lediglich die Steuersignale der Schalter $S_{3/4}$ ignoriert werden, wobei besonders auf den Zeitpunkt $t_7$ zu achten ist, der Spulenstrom kommutiert sich in Freilaufpfad erst nach dem Einschalten von $S_{FP}$.

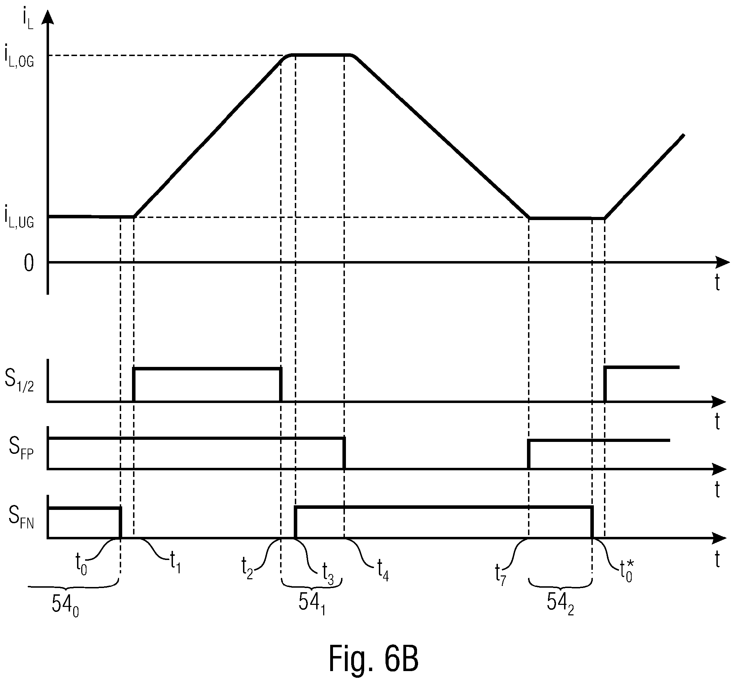

Fig. 6b zeigt die Verläufe für den Spulenstrom und die Gate-Signale für die unidirektionale Variante der Fig. 6a aufbauend auf der Darstellung der Fig. 4.

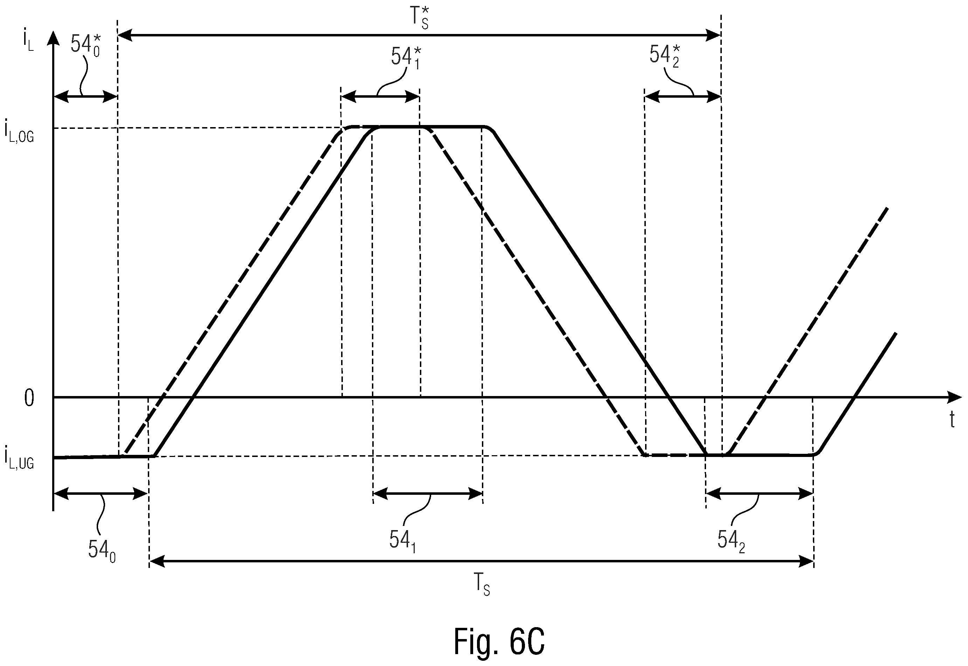

Eine vorteilhafte Ausgestaltung hierin beschriebener Ausführungsbeispiele liegt in der Möglichkeit zur Limitierung der Schaltfrequenz des Gleichspannungswandlers. Gemäß einem Ausführungsbeispiel ist die Steuerungseinrichtung eines erfindungsgemäßen Gleichspannungswandlers ausgebildet, um eine Zeitdauer des Freilaufintervalls gegenüber einem vorangehenden Freilaufintervall zu verlängern, um eine Schaltfrequenz des Gleichspannungswandlers über mehrere Schaltzyklen hinweg zu reduzieren. Die Schaltfrequenzen sind dabei möglicherweise in der Schaltung sind gekoppelt, was bspw. dazu führen kann, dass die Dioden mit der gleichen Frequenz wie die Transistoren passiv geschaltet werden, wie es in Fig. 6c dargestellt ist.

In Fig. 6c ist eine mögliche Auswirkung eines Ausführungsbeispiels gezeigt, bei der die Steuerungseinrichtung ausgebildet ist, um eine Zeitdauer des Freilaufintervalls gegenüber einem vorangehenden Freilaufintervall zu verlängern, um eine Schaltfrequenz der ersten und zweiten Schaltungspfade über mehrere Schaltzyklen hinweg zu reduzieren und/oder um die Zeitdauer des Freilaufintervalls gegenüber dem vorangehenden Freilaufintervall zu verkürzen, um die Schaltfrequenz der ersten und zweiten Schaltungspfade zu erhöhen.

Es wird damit ermöglicht, eine vom Betriebspunkt unabhängige Schaltfrequenz einzustellen und somit unterschiedliche Betriebszustände zu ermöglichen. Dieses Vorgehen ist sowohl bei aktiv steuerbaren Elementen im zweiten Schaltungspfad etwa des Gleichspannungswandlers 20 als auch bei passiv schaltenden Elementen, Dioden, im zweiten Schaltungspfad, etwa des Gleichspannungswandlers 20', möglich. So kann in jeder Variante die beiden Schaltungspfade mit einer gleichen, übereinstimmenden Frequenz geschaltet werden. Sind die schaltenden Elemente des zweiten Schaltungspfades bspw. Transistor, können sie unter Verwendung entsprechender Steuersignale mit der gleichen Schaltfrequenz angesteuert werden wie die Elemente des ersten Schaltungspfades. Wird hingegen zumindest eines der Elemente als Diode implementiert, wird diese selbsttätig mit der gleichen Frequenz passiv zwischen den leitenden und sperrenden Zuständen geschaltet.

So kann die Schaltperiode Ts zu einer Schaltperiode Ts* verkürzt werden, die Frequenz analog erhöht werden. Die in Fig. 3 und/oder in Fig. 6b dargestellten Freilaufintervalle $54_0$, 54, und $54_2$ können ebenfalls verkürzt werden, um verkürzte Freilaufintervalle $54_0$*, 54,* und $54_2$* zu erhalten, womit auch der Stromverlauf in seiner Frequenz direkt beeinflusst wird. Analoge Ergebnisse werden erhalten, wenn die Freilaufintervalle und/oder die Schaltperiode $T_s$ verlängert werden.

Alternativ kann die Steuerungseinrichtung die Zeitdauer des Freilaufintervalls gegenüber dem vorangehenden Freilaufintervall verkürzen, um die Schaltfrequenz des Gleichspannungswandlers zu erhöhen. Die Steuerungseinrichtung kann insofern ausgebildet sein, um die Zeitdauer des Freilaufintervalls unverändert zu lassen, zu verkürzen oder zu erhöhen und dies im zeitlichen Verlauf anzupassen, je nach Bedarf der Schaltfrequenz.

Aufgrund der Aufbauzeit und der Abbauzeit des Spulenstroms in dem induktiven Element 22 kann die ausgeführte Schaltfrequenz in der Gleichspannungswandlertopologie stark von dem Betriebszustand abhängig sein. Für eine geringere Ausgangsleistung kann die gemäß dem Betriebszustand benötigte Schaltfrequenz über die beherrschbaren Frequenzgänge der Steuerung hinausgehen, das bedeutet, diese überschreiten. Dadurch kann es zu Störungen oder Verwirrungen in der Steuerlogik kommen und EMV (elektromagnetische Verträglichkeit)-Probleme zunehmen. Darüber hinaus ist es möglich, dass die Verluste in dem induktiven Element und/oder in anderen Schaltelementen zunehmen, was nachteilig ist. Um die Schaltfrequenz im Betrieb zu limitieren, kann die Zeitdauer des Freilaufintervalls bzw. des Freilaufschritts in der Steuerung aktiv angepasst werden, beispielsweise verlängert. Dies beinhaltet eine Verkürzung, sollte die Verlängerung aufgrund eines veränderten Betriebszustands nicht weiter notwendig sein oder nicht weiter vorteilhaft sein. Durch die Verlängerung der Zeitdauer des Freilaufintervalls kann die ausgeführte gesamte Schaltdauer genügend lang gehalten werden. In einer konkreten Ausführung kann die verlängerte Dauer des Freilaufintervalls in jedem ursprünglich bereitgestellten Freilaufschritt flexibel verteilt, angepasst und/oder hinzugefügt werden.

Nachfolgend wird Bezug genommen auf die Möglichkeiten zur Fehlererkennung und möglicher Schutzverfahren, die durch den hierin beschriebenen schaltbaren Freilaufpfad und ggf. in Zusammenarbeit mit der Detektionseinrichtung erhalten werden. Hierzu wird Bezug genommen auf die Schaltungstopologien der Fig. 2 und 6a, insbesondere den Spannungsabfall $u_{R1}$ über das Widerstandselement 44 sowie die Potentiale $\varphi_{1-}$ und $\varphi_{2-}$ an den Schaltungspfaden und die Potentiale $\varphi_{1-}$ und $\varphi_{1+}$ bzw. $\varphi_{2-}$ und $\varphi_{2+}$.

Die hierin erörterten Möglichkeiten zur Fehlererkennung basieren in Teilen auf den nachfolgend dargelegten Erkenntnissen. Das Auftreten einer Spannungsspitze als Potential $u_{R1}$ kann der Steuerungseinrichtung als Indiz oder Signal dienen, dass ein Fehler in der Schaltung vorliegt. Die damit erkannte Potentialänderung kann für die Steuerungseinrichtung Ursache sein, den Schaltungspfad 14 und/oder den Schaltungspfad 16 sperrend zu schalten.

In anderen Worten, da ein aufgebauter Spulenstrom in einen Pfad weiter fließen soll, wenn ein Schaltelement zufällig wegen der übergeordneten Temperatur legiert, verliert dieses Schalelement sofort seine Sperrfähigkeit und bleibt im leitenden Zustand. Wenn jetzt der Wandler noch weiter in Betrieb taktet, werden die zwei DC-Netze durch das defekte Schaltelement und das andere diagonal stehende Schaltelement verbunden. Dann verliert der Wandler seine Isolation. Dieser Fehler kann als Diagonalverbindung in der Topologie genannt werden.

Um diesen Fehler zu erkennen und die Isolation des Wandlers zu schützen, überwacht die Detektionseinrichtung 42 die Potentialänderung zwischen den beiden DC-Netzen. Wenn eine Diagonalverbindung passiert, verändert sich die Potentialdifferenz zwischen den beiden Schaltungspfaden schlagartig. Da die Spannung über einen Kondensator $C_1$ nicht sprunghaft geändert werden kann, bewirkt dann die Diagonalverbindung eine schlagartige Spannung als das Fehlererkennungssignal über den Widerstand $R_1$.

Wenn beispielsweise die Schaltelemente $S_1$ und $S_4$ fehlerhaft verbunden werden, so werden die Potentiale $\varphi_{1+}$ und $\varphi_{2-}$ kurzgeschlossen. Transient werden die Potentiale $\varphi_{1+}$ und $\varphi_{1-}$ schlagartig in negative Richtung verschoben und die Potentiale $\varphi_{2+}$ und $\varphi_{2-}$ werden in positive Richtung verschoben. Zu dieser Zeit wird eine negative möglicherweise transiente Spannung $u_{R1}(0)$ über den $R_1$ angelegt:

$$u_{R1}(0) = -\varphi_{1+} + \varphi_{2-} < 0$$

für einen Verlauf der Spannung kann gelten:

$$u_{R1}(t) = (-\varphi_{1+} + \varphi_{2-}) \cdot e^{-\frac{t}{\tau}}, \tau = R_1 \cdot C_1$$

In einem anderen Fall, wenn die Schaltelemente $S_2$ und $S_3$ fehlerhaft verbunden werden, werden dann die Potentiale $\varphi_{1-}$ und $\varphi_{2+}$ kurzgeschlossen. Transient werden die Potentiale $\varphi_{1+}$ und $\varphi_{1-}$ schlagartig in positive Richtung verschoben und die Potentiale $\varphi_{2+}$ und $\varphi_{2-}$ werden in negative Richtung verschoben. Zurzeit wird eine positive möglicherweise transiente Spannung über den $R_1$ angelegt:

$$u_{R1}(0) = -\varphi_{1-} + \varphi_{2+} > 0$$

für einen Verlauf der Spannung kann gelten:

$$u_{R1}(t) = (-\varphi_{1-} + \varphi_{2+}) \cdot e^{-\frac{t}{\tau}}, \tau = R_1 \cdot C_1$$

Weil im normalen Betrieb während des Schaltens die Sperrschichtkapazität der Schaltelemente umgeladen wird, auch ein schwaches Störsignal in der Detektionseinrichtung 42 über das Widerstandelement 44 abfallen oder feststellbar sein. Um einen Fehlerfall genau und sicher zu detektieren, wird gemäß einem Ausführungsbeispiel der Spannungspuls über das Widerstandelement 44 nach einer auf den Schaltvorgang bezogenen Zeitverzögerung $t_v$ bestätigt. Wenn die transiente Spannung $u_{Ri}(t_v)$ betragsmäßig noch größer als ein Schwellenwert ist, so kann dies als ein Fehler erkannt werden. Der Schwellenwert kann beispielsweise mit einem Wert von zumindest 50 %, zumindest 30 % oder bis 20 %, sowie geringeren Werten oder größeren Werten bezogen auf ein theoretisches Maximum $u_{R1}(0) \cdot e^{-\frac{t_V}{\tau}}$ festgelegt werden. Der Schwellwert ermöglicht, dass im Normalbetrieb auftretende Störsignale nicht als Fehler erkannt werden, ein tatsächlicher Fehlerfall aber zuverlässig als Auslöser für die hierin beschriebenen Gegenmaßnahmen genutzt werden kann.

Die Zeitverzögerung $t_v$ ist bevorzugt länger als die Kommutierungsdauer beim Umschalten der Schaltelemente im normalen Betrieb. Die Kommutierungsdauer im normalen Betrieb liegt typischerweise in Bereich zwischen 100 ns bis 1.000 ns und kann als eine Art zeitliche Obergrenze oder Worst-Case Grenze verstanden werden. Da im fehlerfreien Fall ein eventueller Spannungspuls während der Kommutierungsdauer abgebaut wird, kann mit einer Zeitdauer $t_v$, die größer ist, erreicht werden, dass ein nach einem erwarteten Abklingen der Spannung während der Kommutierungsdauer immer noch vorhandener Spannungspegel bzw. ein Potential als Fehler interpretiert werden kann. Dies zeigt auch, dass die Erfassung zu Beginn der Kommutierungsdauer mit Bestätigung nach der Zeitdauer $t_v$ eine Zuverlässige zweistufige Erkennung ermöglicht, aber eine Erfassung lediglich nach der Zeit $t_v$ alleinig bereits ausreichend sein kann, da die Kommutierungsdauer verstrichen ist.

Die Zeitkonstante $\tau$ des RC-Glieds der Detektionseinrichtung 42 wird gemäß einer bevorzugten Ausführungsform der vorliegenden Erfindung so ausgelegt, dass die abfallende Spannung $u_{R1}(t_v)$ über dem Widerstandelement 44 nach der Verzögerungszeit $t_v$ noch ordentlich erfasst und von Rauschen unterschieden werden kann, beispielsweise kann die Zeitkonstante mit einem Dreifachen der Zeitverzögerung, also $\tau = 3 \cdot t_v$ ausgelegt werden.

Insbesondere erfolgt eine fehlerhafte Potentialverschiebung möglicherweise bevorzugt oder ausschließlich am Ende eines Freilaufschrittes oder Einschalten eines Schaltelementes nach einem Freilaufschritt. Deshalb kann ein funktionsunfähiges Schaltelement, das laut der Schaltreihenfolge am Anfang vom letzten Freilaufschritt ausgeschaltet werden soll, anhand der betätigten Gate-Signale diagnostiziert werden.

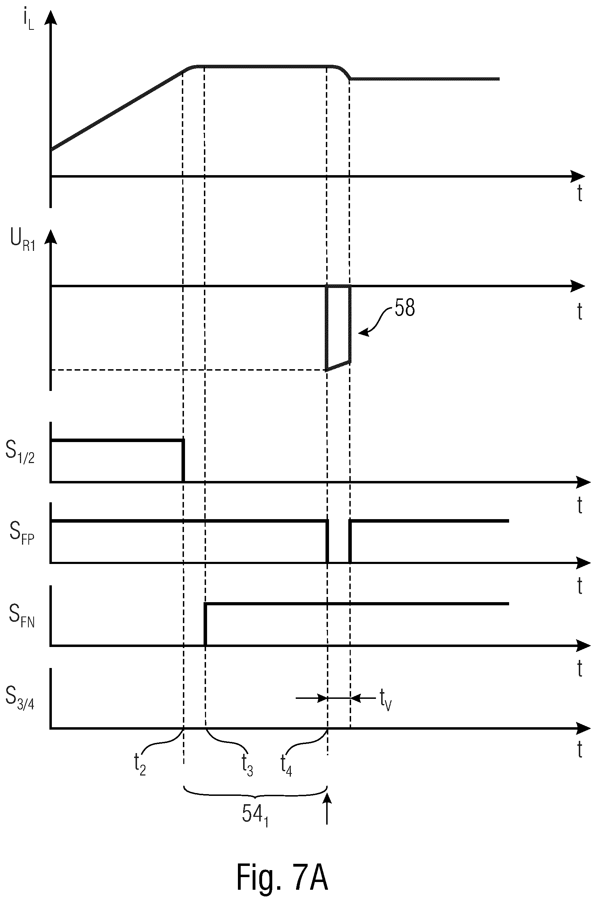

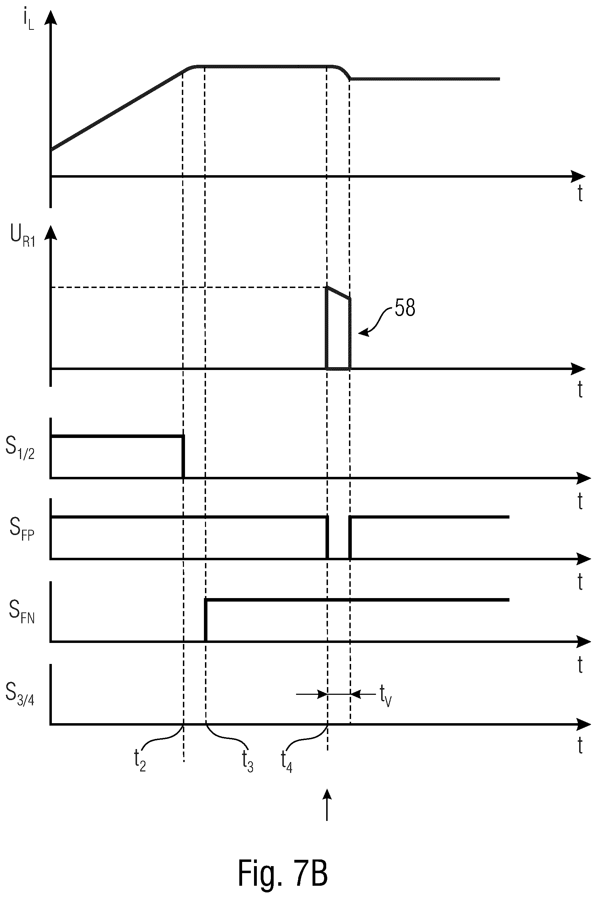

Fig. 7a und Fig. 7b zeigen die Fehlererkennung beim Ausschalten des Schaltelementes $S_{FP}$. Dabei wird die Fehlererkennung an der ausschaltenden Gate-Signalflanke des Schaltelementes $S_{FP}$ ausgelöst. Wenn das Schaltelement $S_1$ (Fig. 7a) defekt ist, bewirkt die Diagonalverbindung ein negatives Spannungssignal in der Detektionseinrichtung 42. Wenn das Schaltelement $S_2$ (Fig. 7a) defekt ist, bewirkt die Diagonalverbindung ein positives Spannungssignal in der Detektionseinrichtung 42.

Um die Störung aus der umgeladene Sperrschichtkapazität auszufiltern, soll das Fehlererkennungssignal in eine eingestellte Verzögerungszeit $t_v$, die normalerweise einigen hundert ns bis tausend ns dauert, bestätigt werden. Das bedeutet, die Steuerungseinrichtung kann ausgebildet sein, um die Potentialänderung mit einer Verzögerungszeit von höchsten 800 ns, höchstens 500 ns oder höchstens 200 ns erneut erfassen und zur Überprüfung heranziehen. Wenn das Fehlererkennungssignal nach der Verzögerung noch aktiv ist, wird der Fehler bestätigt und der Fehlerschutz wird gleichzeitig oder in Reaktion darauf aktiviert. Dadurch werden die Schaltelemente $S_1$, $S_2$, $S_3$, $S_4$ ausgeschaltet und die Schaltelemente im bidirektionalen Schalter bzw. Freilaufpfad werden dauerhaft eingeschaltet. Dadurch wird die Diagonalverbindung abgebrochen. Die drei anderen Schaltelemente ermöglichen es, die Isolation weiter beizubehalten und die in der Spule 22 gespeicherte Energie wird in den bidirektionalen Schalter freigesetzt. Diese Phasenschaltung 34 des DC / DC-Wandlers ist zu deaktivieren. Anhand des Fehlererkennungssignals kann der Fehler in Schaltelement $S_1$ oder $S_2$ erkannt werden.

Das nach der Verzögerungszeit $t_v$ noch auftretende Spannungssignal 58 ermöglicht somit an sich bereits die Erkennung des Vorhandenseins eines Fehlerzustandes. Dabei kann die Fehlererkennung unterschiedlich ausgestaltet werden. So kann während des regulären Betriebs des Gleichspannungswandlers inner-

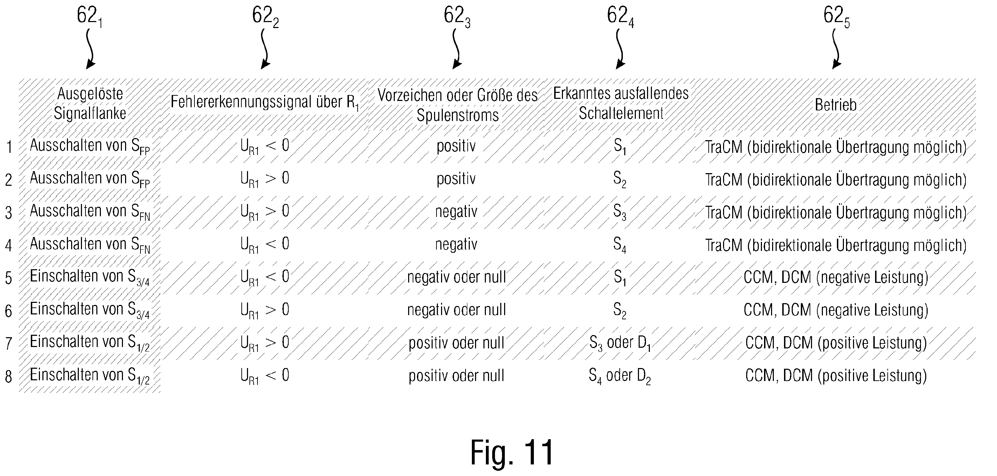

halb der Zeitdauer $t_2$ und ts, siehe bspw. Fig. 3 und Fig. 4, ein Spannungsabfall in der Detektionseinrichtung 42 auftreten. Diese sind dann aber von kurzer zeitlicher Dauer und von der Kommutierungsdauer der geschalteten Elemente abhängig, so dass sie nach der entsprechend eingestellten Zeitdauer $t_v$ abgeklungen sind. Eine Überprüfung dahingehend, ob zu einem Zeitpunkt $t_4+t_v$ immer noch oder alternativ überhaupt ein entsprechendes Potential bzw. das Spannungssignal 58 vorliegt, kann deshalb Aufschluss darüber liefern, dass das Spannungssignal nicht durch einen regulären Betrieb. Sondern durch einen Fehler im Gleichspannungswandler ausgelöst wurde. Das kann zum einen Gegenmaßnahmen dahingehend auslösen, dass der Freilaufpfad leitend geschalten wird und/oder die Schalter $S_1$ und $S_2$ bzw. $S_1$ bis $S_4$, sofern noch betriebsbereit, in einen geöffneten Zustand geschaltet werden, und kann zum anderen für eine Fehleranalyse eingesetzt werden, die im Zusammenhang mit der Fig. 11 beschrieben ist. Es kann sich aber ebenso in einem Gleichspannungswandler herausstellen, dass die Amplitude des Spannungssignals 58 durch den regulären Betrieb weit unterhalb des theoretisch möglichen Pegel liegt, so dass alternativ oder zusätzlich zur Betrachtung der Zeit $t_v$ auch eine Schwellwertentscheidung zum Spannungssignal 58 durch die Detektionseinrichtung 42 und/oder die Steuerungseinrichtung 26 ausgeführt werden kann, ob ein erfasster Puls oder Spannungsverlauf als Fehler anzusehen ist oder nicht, was für die ansteigende und/oder die abfallende Flanke und als Alternative oder Ergänzung zur Auswertung lediglich einer der beiden Flanken oder beider Flanken angewendet werden kann.

Wie es nachfolgend noch ausgeführt wird, ermöglicht die Berücksichtigung des Zeitpunkts des Auftretens sowie die Berücksichtigung eines Vorzeichens des Spannungssignals 58 auch die Lokalisierung des fehlerhaften Elementes. Gemäß einem Ausführungsbeispiel wird ein Gleichspannungswandler bereitgestellt, bei dem ein Auftreten der Potentialänderung als Reaktion auf ein Ansteuern eines angesteuerten schaltbaren Elementes, beispielsweise eines der Schalter $18_1$-$18_4$ und/oder der Schalter $33_1$ oder $33_2$ bzw. eines angesteuerten schaltbaren Elementes in dem Schaltungspfad 14, dem Schaltungspfad 16 und/oder des Freilaufpfades eindeutig als ein Defekt eines anderen Elementes der Wandlerschaltung angezeigt wird.

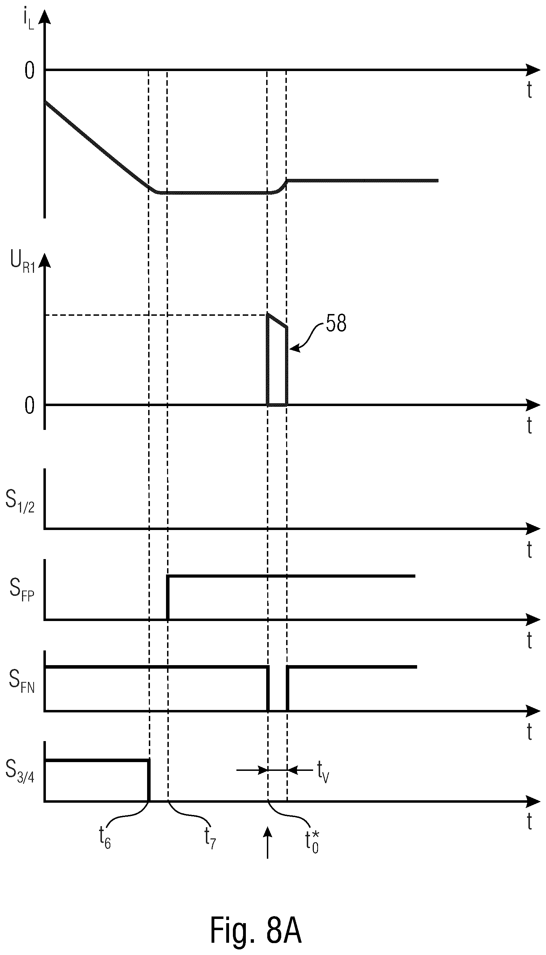

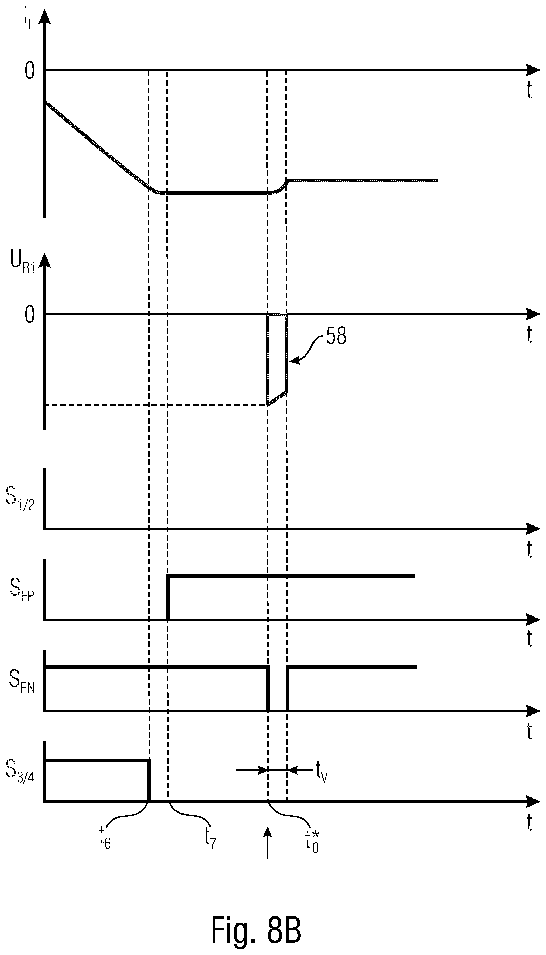

In Fig. 8a und Fig. 8b wird die Fehlererkennung beim Ausschalten des Schaltelementes $S_{FN}$ beispielhaft dargestellt. Dabei wird die Fehlererkennung an der ausschaltenden Gate-Signalflanke des Schaltelementes $S_{FN}$ ausgelöst. Wenn das Schaltelement $S_3$ (Fig. 8a) defekt ist, bewirkt die Diagonalverbindung ein positives Spannungssignal in die Detektionseinrichtung 42. Wenn das Schaltelement $S_4$ (Fig. 8b) defekt ist, bewirkt die Diagonalverbindung ein negatives Spannungssignal in die Detektionseinrichtung 42. Wenn das Fehlererkennungssignal nach einer Verzögerung $t_v$ übereinstimmend mit den Fig. 7a-b zur Betätigung noch aktiv aufweist, wird der Fehler bestätigt. Der Fehlerschutz wird sofort aktiviert, dass die Schaltelemente $S_1$, $S_2$, $S_3$, $S_4$ ausgeschaltet werden und die Schaltelemente im bidirektionalen Schalter werden dauerhaft eingeschaltet. Anhand des Fehlererkennungssignals kann der Fehler in Schaltelement $S_3$ oder $S_4$ erkannt werden.

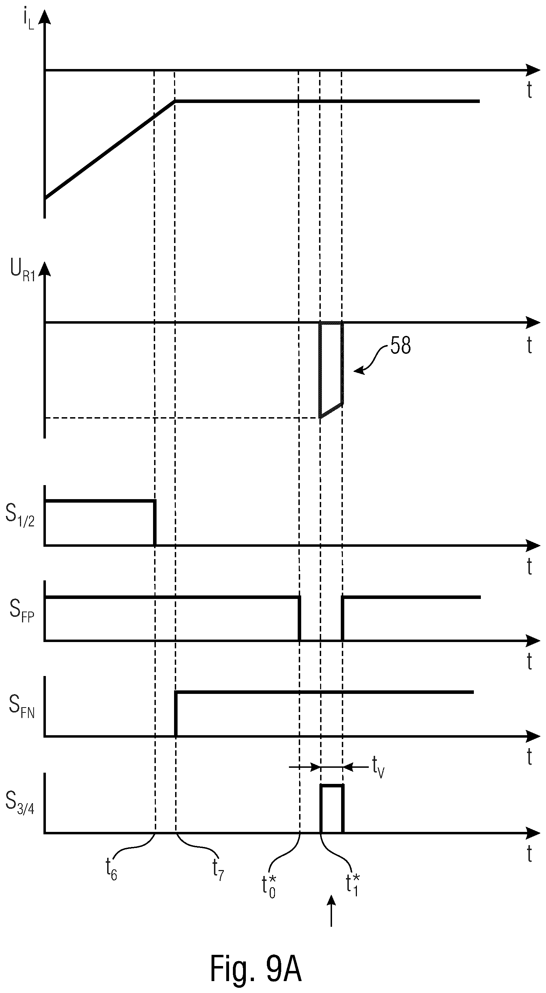

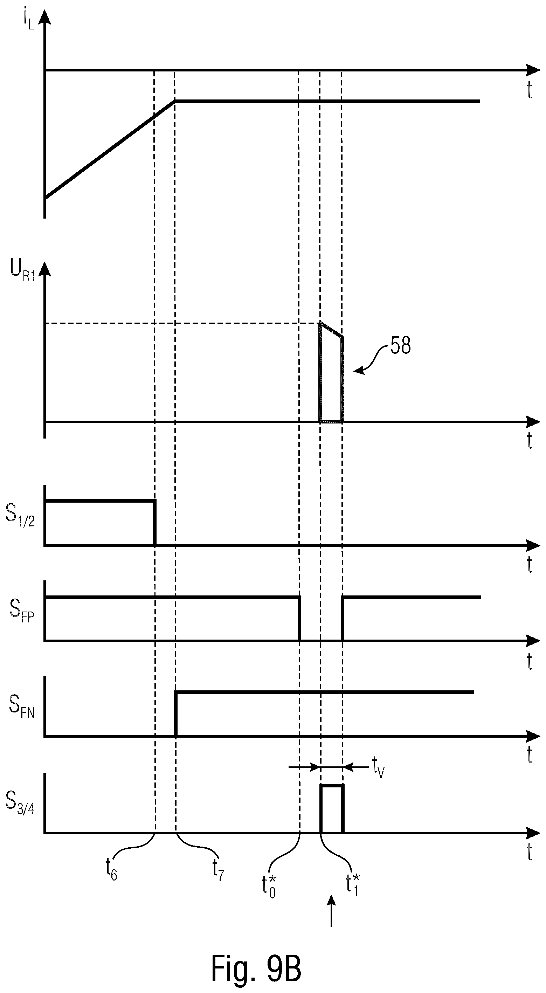

Fig. 9a und Fig. 9b stellen beispielhaft die Fehlererkennung beim Einschalten des Schaltelementes $S_{3/4}$ dar. Dabei wird die Fehlererkennung an der einschaltenden Gate-Signalflanke des Schaltelementes $S_{3/4}$ ausgelöst. Wenn das Schaltelement $S_1$ (Fig. 9a) defekt ist, bewirkt die Diagonalverbindung ein negatives Spannungssignal in die Detektionseinrichtung 42. Wenn das Schaltelement $S_2$ (Fig. 9b) defekt ist, bewirkt die Diagonalverbindung ein positives Spannungssignal in die Detektionseinrichtung 42. Wenn das Fehlererkennungssignal nach einer Verzögerung $t_v$ übereinstimmend mit den Fig. 7a-b und Fig. 8abb zur Bestätigung noch aktiv aufweist, wird der Fehler bestätigt. Der Fehlerschutz wird sofort aktiviert, dass die Schaltelemente $S_1$, $S_2$, $S_3$, $S_4$ ausgeschaltet werden und die Schaltelemente im bidirektionalen Schalter werden dauerhaft eingeschaltet. Anhand des Fehlererkennungssignals kann der Fehler in Schaltelement $S_1$ oder $S_2$ erkannt werden.

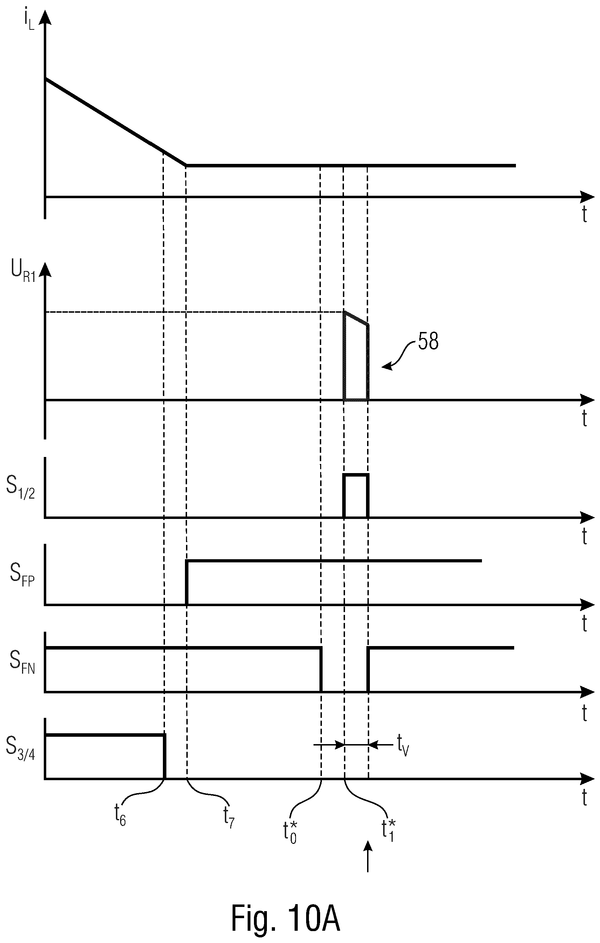

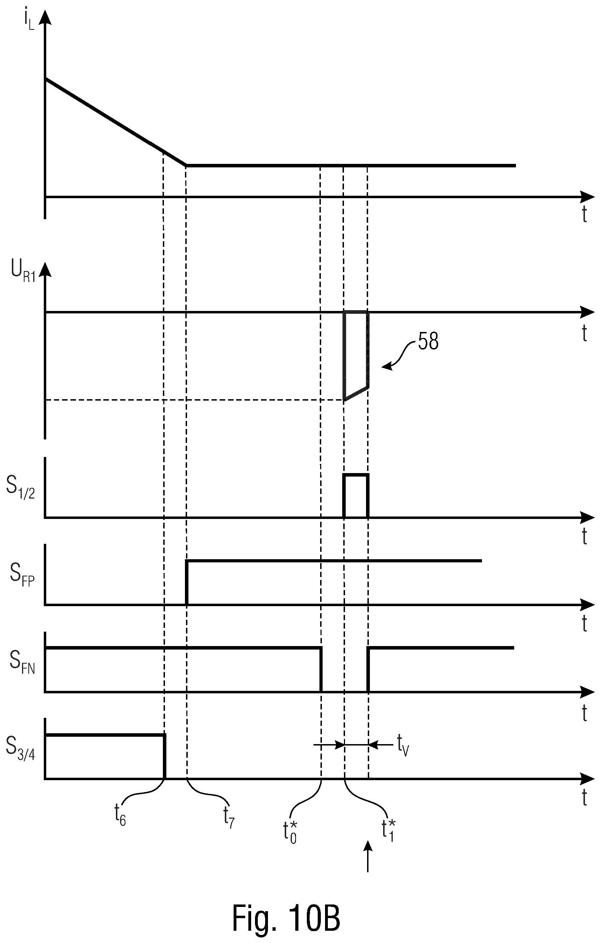

Fig. 10a und Fig. 10b stellen beispielhaft die Fehlererkennung beim Einschalten des Schaltelementes $S_{1/2}$ dar. Dabei wird die Fehlererkennung an der einschaltenden Gate-Signalflanke des Schaltelementes $S_{1/2}$ ausgelöst. Wenn das Schaltelement $S_3$ (Fig. 10a) defekt ist, bewirkt die Diagonalverbindung ein positives Spannungssignal in die Detektionseinrichtung 42. Wenn das Schaltelement $S_4$ (Fig. 10b) defekt ist, bewirkt die Diagonalverbindung ein negatives Spannungssignal in die Detektionseinrichtung 42. Wenn das Fehlererkennungssignal - wie im Zusammenhang mit den Fig. 7a-b, Fig. 8a-b und Fig. 9a-b beschrieben - nach einer Verzögerung $t_v$ zur Bestätigung noch aktiv aufweist, wird der Fehler in einer möglichen Ausgestaltung bestätigt. Der Fehlerschutz wird sofort aktiviert, dass die Schaltelemente $S_1$, $S_2$, $S_3$, $S_4$ ausgeschaltet werden und die Schaltelemente im bidirektionalen Schalter werden dauerhaft eingeschaltet. Anhand des Fehlererkennungssignals kann der Fehler in Schaltelement $S_3$ oder $S_4$ erkannt werden.

Für die unidirektionale Variante eines hierin beschriebenen Gleichspannungswandlers können die Dioden D1 und D2 bzw. $56_1$ und $56_2$ in der Fehlererkennung den Schaltelementen $S_3$ und $S_4$ bzw. $18_3$ und $18_4$ entsprechen. Ein Unterschied kann darin bestehen, dass der Spulenstrom dabei kein negatives Vorzeichen aufweist und deshalb positiv ist oder den Wert null aufweist.

Fig. 11 zeigt eine beispielhafte Tabelle zum Aufschlüsseln von Entscheidungsbedingungen für die Fehlererkennung bzw. Fehlerlokalisation anhand des Spannungssignals 58 zusammen mit der Betriebsart des Gleichspannungswandlers und dem Zeitpunkt innerhalb eines Schaltungszyklus. Eine Spalte $62_1$ gibt für Zeilen 1-8 der Tabelle an, welches Ereignis auslösend für das Spannungssignal 58 ist. In den Zeilen 1 und 2 ist es das Ausschalten des Schalters $S_{FP}$ bzw. $33_2$ in den Zeilen 3 und 4 das Ausschalten des Schalters $S_{FN}$ bzw. $33_1$. In den Zeilen 5 und 6 ist es das Einschalten der Schaltelemente $S_{3/4}$, das heißt, der Schalter $18_3$ und $18_4$. In den Zeilen 7 und 8 ist das Einschalten der Schaltelemente $S_{1/2}$ bzw. $18_1$ und $18_2$ angegeben. Bezogen auf das Zeitdiagramm der Fig. 3 betreffen die Zeilen 1 und 2 den Zeitpunkt $t_4$, die Zeilen 3 und 4 den Zeitpunkt $t_0$ bzw.

$t_0^*$, die Zeilen 5 und 6 den Zeitpunkt $t_5$ und die Zeilen 7 und 8 den Zeitpunkt $t_1$.

Anhand der Spalte $62_2$ wird jeder dieser paarweisen Zuordnungen der Zeilen 1/2, 3/4, 5/6 und 7/8 dahingehend unterschieden, ob das Spannungssignal 58 ein negatives oder positives Vorzeichen aufweist, das heißt, $u_{R1} < 0$ oder $u_{R1} > 0$ vorliegt.

Eine Spalte $62_3$ kombiniert dies mit einem Erkennen eines Vorzeichens des Spulenstroms und eine Spalte $62_5$ gibt an, in welchem Betriebszustand TraCM, CCM oder DCM der Gleichspannungswandler betrieben wird.

In Spalte $62_4$ wird angeben, welches der Schaltelemente als defekt oder ausgefallen anzusehen ist.

Da die Diagonalverbindung nur beim Ausfall eines Schaltelementes auftritt, wird das Spannungssignal 58 im normalen Betrieb nicht aktiviert bzw. nicht festgestellt. Deshalb können die in der Tabelle der Fig. 11 dargestellten acht Fälle der Fehlererkennung gleichzeitig in der Steuerung parallel überwacht werden.

Aus der Tabelle der Fig. 11 wird in Zusammenschau mit der Fig. 3 ebenfalls deutlich, dass phasenversetzt zueinander angesteuerte Wandlerschaltungen ein entsprechend eindeutiges Signal bzw. eine entsprechend eindeutige Information zu unterschiedlichen Zeitpunkten liefern können, solange sichergestellt ist, dass die angegebenen Zeitpunkte der Fig. 3 sich nicht überschneiden.

Für eine mehrphasige Anwendung können die Phasenschaltungen 34 bevorzugt verschachtelt getaktet werden. Dabei werden die Schaltvorgänge in den Phasenschaltungen 34 zeitlich sequenziell verteilt, weshalb eine gemeinsame Detektionseinrichtung 42 für mehrere Phasenschaltungen zur Fehlererkennung möglich ist. Insbesondere bietet der durch den bidirektionalen Schalter des Freilaufpfades 32 oder 32' erhaltene Freilaufschritt bzw. das Freilaufintervall eine Möglichkeit, den Phasenversatz und die Schaltfrequenz zwischen den mehreren Phasen anzupassen. Gemäß einem Ausführungsbeispiel ist deshalb vorgesehen, dass die Steuerungseinrichtung unterschiedliche Phasenschaltungen 34 des Gleichspannungswandlers 20 oder 20'individuell schaltet und hinsichtlich der Schaltfrequenz anpasst, etwa indem die Zeitdauer des Freilaufintervalls wie hierin beschrieben angepasst wird, beispielsweise um die für die Fehlererkennung gemäß Fig. 11 relevanten Zeitpunkte zeitlich disjunkt voneinander zu halten.

Alternativ oder zusätzlich ist es möglich, die kombinatorische Überwachung mehrerer Phasenschaltungen lediglich gruppenweise vorzunehmen oder jede Phasenschaltung 34 mit einer eigenen Detektionseinrichtung 42 zu verkoppeln, wodurch eine verschachtelte Taktung zwischen den Phasenschaltungen 34 nicht mehr notwendig ist. Die Detektionseinrichtung 42 wird bevorzugt an beiden Seiten mit einem jeweiligen und voneinander verschiedenen Schaltungspfaden 14 und 16 verbunden. Wird anstelle der gezeigten Darstellung ein anderer Koppelpunkt verwendet, so ändert sich gegebenenfalls das Vorzeichen von $U_{R1}$, was in der Fehlererkennung problemlos berücksichtigt werden kann.

Ausführungsbeispiele schaffen DC/DC-Wandler mit einer Fehlerschutzmaßnahme gegen den Ausfall eines oder mehrerer Transistoren. Diese DC/DC-Wandler verbinden zwei verschiedene DC-Netze und realisieren eine unidirektionale oder bidirektionale Energieübertragung dazwischen. Durch die auf den Halbleitern basierte Potentialtrennung (Pseudoisolation) ermöglicht dieser Wandler eine Isolation ohne Transformator. Insbesondere kann sichergestellt werden, dass dieser Wandler seine Isolationsfähigkeit zwischen zwei DC-Netzen bei einem einfachen Fehler beibehalten kann bzw. überleben kann. Dabei ist ein Fehlererkennungsverfahren gemäß hierin beschriebenen Ausführungsbeispielen von Vorteil und die Schutzmaßnahme mit der entsprechenden Schutzschaltung einsetzbar.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Gleichspannungswandler mit:

   einer Wandlerschaltung (12) umfassend einen schaltbaren ersten Schaltungspfad (14), der in einem ersten Zeitintervall leitend ist, und der zumindest ein erstes und ein zweites seriell verschaltetes schaltbares Element ($18_1$, $18_2$) aufweist, und umfassend einen vermittels eines induktiven Elements (22) mit dem ersten Schaltungspfad (14) gekoppelten zweiten Schaltungspfad (16), der in einem zum ersten Zeitintervall disjunkten zweiten Zeitintervall leitend ist, wobei zwischen dem ersten Zeitintervall und dem zweiten Zeitintervall ein zeitlicher Abstand liegt;
   eine Steuerungseinrichtung (26), die für ein Schalten des ersten Schaltungspfades eingerichtet ist;
   einem schaltbaren Freilaufpfad (32; 32'), der parallel zu dem induktiven Element (22) gekoppelt ist, wobei die Steuerungseinrichtung (26) ausgebildet ist, um den schaltbaren Freilaufpfad (32; 32') in einem Freilaufintervall (54) während dem zeitlichen Abstand zeitweise leitend zu schalten.

2. Gleichspannungswandler gemäß Anspruch 1, bei dem der zweite Schaltungspfad (16) ein drittes schaltbares Element ($18_3$) und ein viertes schaltbares Element ($18_4$) umfasst; wobei die Steuerungseinrichtung (26) ausgebildet ist, um das dritte schaltbare Element ($18_3$) und das vierte schaltbare Element ($18_4$) zu schalten.

3. Gleichspannungswandler gemäß Anspruch 1 oder 2, bei dem der Freilaufpfad (32; 32') in einem leitenden Zustand bidirektional leitend ist und/oder in einem nichtleitenden Zustand bidirektional sperrend ist.

4. Gleichspannungswandler gemäß Anspruch 3, wobei der Freilaufpfad (32; 32') zumindest ein Schaltelement (33) aufweist, das in dem leitenden Zustand bidirektional leitend und in dem nichtleitenden Zustand bidirektional nichtleitend ist; oder

wobei der Freilaufpad ein erstes Schaltelement ($33_1$) aufweist, das in dem nichtleitenden Zustand unidirektional entlang einer ersten Richtung des Freilaufpfades (32') sperrend ist; und ein zweites Schaltelement ($33_2$) aufweist, das in dem nichtleitenden Zustand unidirektional entlang einer entgegengesetzten zweiten Richtung des Freilaufpfades (32') sperrend ist; wobei das erste Schaltelement ($33_1$) und das zweite Schaltelement ($33_2$) so verschaltet sind, dass in dem nichtleitenden Zustand der Freilaufpfad (32; 32') in der ersten Richtung und/oder der zweiten Richtung sperrend ist.

5. Gleichspannungswandler gemäß einem der vorangehenden Ansprüche, bei dem der Freilaufpfad (32') einen ersten Halbleiterschalter ($33_1$) und einen antiseriell zum ersten Halbleiterschalter ($33_1$) gekoppelten zweiten Halbleiterschalter ($33_2$) umfasst, etwa mit einander benachbarten Drain-Anschlüssen oder Kollektor-Anschlüssen.

6. Gleichspannungswandler gemäß einem der vorangehenden Ansprüche, bei dem die Steuerungseinrichtung (26) ausgebildet ist, um eine Zeitdauer des Freilaufintervalls (54) gegenüber einem vorangehenden Freilaufintervall (54) zu verlängern, um eine Schaltfrequenz des ersten Schaltungspfades (14) und eines optionalen zweiten Schaltungspfades (16) über mehrere Schaltzyklen hinweg zu reduzieren; und/oder um die Zeitdauer des Freilaufintervalls (54) gegenüber dem vorangehenden Freilaufintervall (54) zu verkürzen, um die Schaltfrequenz des ersten Schaltungspfades (14) und des zweiten Schaltungspfades (16) zu erhöhen.

7. Gleichspannungswandler gemäß einem der vorangehenden Ansprüche, mit einer Detektionseinrichtung (42), die mit dem ersten Schaltungspfad (14) und dem zweiten Schaltungspfad (16) gekoppelt ist, und ausgebildet ist, um eine Potentialänderung (58) zwischen dem ersten Schaltungspfad (14) und dem zweiten Schaltungspfad (16) zu erfassen; wobei die Steuerungseinrichtung (26) ausgebildet ist, um basierend auf der Potentialänderung (58) das Schalten des ersten Schaltungspfades zumindest teilweise zu beenden.

8. Gleichspannungswandler gemäß einem der vorangehenden Ansprüche, bei dem das erste schaltbare Element und/oder das zweite schaltbare Element einen Halbleiterschalter umfasst.

9. Gleichspannungswandler gemäß einem der Ansprüche 6 bis 8, bei dem die Detektionseinrichtung (42) ein R-C-Glied mit einem Widerstandselement, R, (44) und einem kapazitiven Element, C, (46) umfasst, und ausgebildet ist, um einen Spannungsabfall über dem Widerstandselement (44) und/oder dem kapazitiven Element (46) zu erfassen, um die Potentialänderung (58) zu erfassen.

10. Gleichspannungswandler gemäß Anspruch 9, bei dem die Steuerungseinrichtung (26) ausgebildet ist, um bei einer erkannten Potentialänderung (58) den schaltbaren Freilaufpad (32; 32') leitend zu schalten.

11. Gleichspannungswandler gemäß einem der Ansprüche 6 bis 10, bei dem die Steuerungseinrichtung (26) ausgebildet ist, um bei einer erkannten Potentialänderung (58) den ersten Schaltungspfad (14) und/oder den zweiten Schaltungspfad (16) sperrend zu schalten.

12. Gleichspannungswandler gemäß einem der vorangehenden Ansprüche, mit einer Mehrzahl von parallelgeschalteten Wandlerschaltungen (12);

wobei die Steuerungseinrichtung (26) ausgebildet ist, um die Mehrzahl von Wandlerschaltungen (12) zeitversetzt zueinander anzusteuern, so dass zu jedem Zeitpunkt ein Pfad höchstens einer Wandlerschaltung (12) geschaltet wird; und wobei die Detektionseinrichtung (42) mit der Mehrzahl von Wandlerschaltungen (12) gekoppelt ist, um eine Potentialänderung (58) in jeder der Wandlerschaltungen (12) eindeutig festzustellen.

13. Gleichspannungswandler gemäß einem der vorangehenden Ansprüche, bei dem die Steuerungseinrichtung (26) ausgebildet ist, um den Gleichspannungswandler in zumindest einem aus einem kontinuierlichen Betrieb, CCM; einem diskontinuierlichen Betrieb, DCM, einem trapezförmigen Betrieb mit wechselndem Vorzeichen im Strom, TraCM, und einem Grenzbetrieb, BCM, zu steuern.

14. Gleichspannungswandler gemäß einem der vorangehenden Ansprüche, mit einer Mehrzahl von Wandlerschaltungen (12); und und einer korrespondierenden Mehrzahl von Detektionseinrichtungen (42), die jeweils mit einer der Mehrzahl von Wandlerschaltungen (12) zum Überwachen derselben gekoppelt sind.

15. Gleichspannungswandler gemäß einem der vorangehenden Ansprüche, bei dem ein Auftreten der Potentialänderung (58) als Reaktion auf ein Ansteuern eines angesteuerten schaltbaren Elements ($18_1$, $18_2$) in dem ersten Schaltungspfad, eines schaltbaren Elementes ($18_3$, $18_4$) eines zweiten Schaltungspfades in dem zweiten Schaltungspfad (16) oder des schaltbaren Freilaufpfades (32; 32') eindeutig ein anderes Element der Wandlerschaltung (12) als defektes Element anzeigt.

Fig. 1

EP 4 586 483 A1

Fig. 2

Fig. 3

Fig. 4

EP 4 586 483 A1

Fig. 5

Fig. 6A

EP 4 586 483 A1

Fig. 6B

EP 4 586 483 A1

Fig. 6C

Fig. 7A

Fig. 7B

Fig. 8A

Fig. 8B

Fig. 9A

Fig. 9B

Fig. 10A

Fig. 10B

EP 4 586 483 A1

| | Ausgelöste Signalflanke | Fehlererkennungssignal über $R_1$ | Vorzeichen oder Größe des Spulenstroms | Erkanntes ausfallendes Schaltelement | Betrieb |
|---|---|---|---|---|---|
| 1 | Ausschalten von $S_{FP}$ | $U_{R1} < 0$ | positiv | $S_1$ | TraCM (bidirektionale Übertragung möglich) |
| 2 | Ausschalten von $S_{FP}$ | $U_{R1} > 0$ | positiv | $S_2$ | TraCM (bidirektionale Übertragung möglich) |
| 3 | Ausschalten von $S_{FN}$ | $U_{R1} > 0$ | negativ | $S_3$ | TraCM (bidirektionale Übertragung möglich) |
| 4 | Ausschalten von $S_{FN}$ | $U_{R1} < 0$ | negativ | $S_4$ | TraCM (bidirektionale Übertragung möglich) |
| 5 | Einschalten von $S_{3/4}$ | $U_{R1} < 0$ | negativ oder null | $S_1$ | CCM, DCM (negative Leistung) |
| 6 | Einschalten von $S_{3/4}$ | $U_{R1} > 0$ | negativ oder null | $S_2$ | CCM, DCM (negative Leistung) |
| 7 | Einschalten von $S_{1/2}$ | $U_{R1} > 0$ | positiv oder null | $S_3$ oder $D_1$ | CCM, DCM (positive Leistung) |
| 8 | Einschalten von $S_{1/2}$ | $U_{R1} < 0$ | positiv oder null | $S_4$ oder $D_2$ | CCM, DCM (positive Leistung) |

Spalten: $62_1$, $62_2$, $62_3$, $62_4$, $62_5$

Fig. 11

Europäisches Patentamt
European Patent Office
Office européen des brevets

# EUROPÄISCHER RECHERCHENBERICHT

**Nummer der Anmeldung**

EP 24 15 1415

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CHEN TAO ET AL: "An optimized bidirectional buck-boost? converter for DC bus voltage stabilization in new generation poloidal field power supply", ENERGY REPORTS, Bd. 8, 1. Mai 2022 (2022-05-01), Seiten 188-200, XP093177439, ISSN: 2352-4847, DOI: 10.1016/j.egyr.2021.11.016 * Seite 189 - Seite 193; Abbildungen 1-4 * ----- | 1-15 | INV. H02M3/158 |
| A | SHARMA AMBUJ ET AL: "Non-isolated bidirectional DC-DC converters with multi-converter functionality employing novel start-up and mode transition techniques", IET POWER ELECTRONICS, IET, UK, Bd. 13, Nr. 14, 4. November 2020 (2020-11-04), Seiten 3110-3118, XP006093162, ISSN: 1755-4535, DOI: 10.1049/IET-PEL.2019.0928 * Abbildungen 3, 5 * ----- | 1-15 | |

**RECHERCHIERTE SACHGEBIETE (IPC)**

H02M

Der vorliegende Recherchenbericht wurde für alle Patentansprüche erstellt

| Recherchenort | Abschlußdatum der Recherche | Prüfer |
|---|---|---|
| Den Haag | 20. Juni 2024 | Zeljkovic, Sandra |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..............................................................................
& : Mitglied der gleichen Patentfamilie, übereinstimmendes Dokument

EPO FORM 1503 03.82 (P04C03)